# EUROPÄISCHE PATENTSCHRIFT

(11) **EP 4 413 307 B1**
(45) Veröffentlichungstag und Bekanntmachung des Hinweises auf die Patenterteilung: **27.08.2025**
(21) Anmeldenummer: 22817175.7
(22) Anmeldetag: 09.11.2022
(51) Int. Cl.: F24S 30/452, F24S 80/30, H02S 20/32

(54) **NACHFÜHREINHEIT FÜR EINE SOLARANLAGE**
TRACKING UNIT FOR A SOLAR SYSTEM
UNITÉ DE SUIVI POUR UNE INSTALLATION SOLAIRE

(30) Priorität: 09.11.2021 AT 602772021
(43) Veröffentlichungstag der Anmeldung: 14.08.2024
(73) Patentinhaber: Hadlauer, Martin, 8010 Graz (AT)
(72) Erfinder: Hadlauer, Martin, 8010 Graz (AT)
(74) Vertreter: Schardmüller Gall-Schuhmann Patentanwälte OG
(86) Internationale Anmeldenummer: PCT/EP2022/081353
(87) Internationale Veröffentlichungsnummer: WO 2023/083905

(56) Entgegenhaltungen:
- WO-A1-2021/121858
- US-A- 3 990 731
- US-A- 4 209 192
- US-A1- 2015 184 894
- US-A1- 2015 303 864
- US-A1- 2017 038 096
- US-B1- 6 899 097
- US-B2- 10 778 140

## Beschreibung

Die vorliegende Erfindung betrifft eine Nachführeinheit für eine Solaranlage, sowie eine Solaranlage.

### Stand der Technik

Nachführeinheiten für Solaranlagen, insbesondere solche für eine zweiachsige Nachführung der Solarkollektoren und/oder Solarzellen, waren bisher mit dem großen Nachteil behaftet, dass sämtliche Leitungen der Anlage, etwa hydraulische oder dampfdurchströmte Leitungen, elektrische Leitungen sowie Leitungen für Reinigungsflüssigkeit, freiliegend entlang der Steher und Tragarme der Solaranlage geführt wurden, was mangels Schutz dieser Leitungen vor Witterungseinflüssen mit einer hohen Versagenshäufigkeit und mit einem entsprechend hohen Wartungsaufwand einhergeht. Im Falle einer nur vereinzelt vorkommenden internen - und somit vor Witterungseinflüssen geschützten - Unterbringung jener Leitungen innerhalb der Steher und/oder Tragarme ergab sich stets der Nachteil, dass sich die Wartung dieser Leitungen, aufgrund der Unzugänglichkeit, sehr aufwändig gestaltete. Zudem sind Konstruktionen mit entsprechend flexiblen Schläuchen, die aufgrund der ständigen Nachführbewegungen erforderlich sind, sehr teuer und auch die Installation solcher Anlagen gestaltet sich, insbesondere aufgrund der mühsamen Herstellung sämtlicher Anschlüsse, äußerste aufwändig.

Die Dokumente US 2015/0303864 und US 6,899,097 offenbaren Nachführeinheiten für Solaranlagen. Eine Verteilereinheit zur Befüllung zweier Schlauchanschlussstationen mit Petroleum aus einem Verladearm ist beispielsweise aus US 4,209,192 A bekannt.

### Darstellung der Erfindung

Die vorliegende Erfindung hat sich daher die Aufgabe gestellt, eine zweiachsige Nachführung einer Solaranlage zu ermöglichen, welche die aus dem Stand der Technik bekannten Nachteile vermeidet. Insbesondere soll eine Nachführeinheit mit anschlussfertigen Ausgängen für sämtliche Leitungen der Solaranlage bereitgestellt werden, insbesondere hydraulische oder dampfdurchströmte, elektrische oder sonstige Versorgungs- und Betriebsleitungen, die eine sichere und drehwinkelunabhängige Umleitung sämtlicher Leitungen erlaubt. Weiters sollen gemäß einer weiteren Aufgabe der Erfindung Vor- und Rücklaufleitungen des Stehers im Inneren der Nachführeinheit über beide Drehachsen (Azimut und Höhenwinkel bzw. Sonnenhöhe), vorzugsweise abdichtend bis zu 30 bar Betriebsdruck, umgeleitet und auf zwei Teilströme für zwei Tragarme der Solaranlage aufgeteilt werden können. Weiters soll es gemäß einer weiteren Aufgabe der Erfindung möglich sein, Heißdampf mit bis zu 400°C intern geführt abzuleiten. Weiters soll gemäß einer weiteren Aufgabe der Erfindung die Möglichkeit geschaffen sein, eine hydraulische Zuleitung mit Umleitung über die Drehachsen für Reinigungsmittel (Reinigungswasser) vorzusehen. Weiters soll es gemäß einer weiteren Aufgabe der Erfindung möglich sein, die Solaranlage mit Ausgängen für elektrische Leitungen für PV-Strom auszustatten, wobei die Umleitung dieser elektrischen Leitungen ebenfalls im Inneren der Nachführeinheit erfolgen und keinen Drehwinkeleinschränkungen unterliegen soll. Weiters soll gemäß einer weiteren Aufgabe der Erfindung eine Drehung um die Vertikalachse (Azimut) uneingeschränkt möglich sein (beliebige Rundumdrehungen); die Drehmöglichkeit um die Horizontalachse (Sonnenhöhe) soll zumindest 180° betragen. Weiters soll es gemäß einer weiteren Aufgabe der Erfindung möglich sein, die Solarkollektoren, insbesondere Spiegelkollektoren, oder Solarzellen in eine nach unten, in Richtung Erdboden weisende Schutzposition zu schwenken, um besonders kritische Bauelemente (z.B. Spiegel) bei Stürmen oder anderen extremen Wetterbedingungen rasch abnehmen und sicher verwahren zu können. Weiters soll gemäß einer weiteren Aufgabe der Erfindung die Steuereinheit im inneren der Nachführeinheit untergebracht werden können. Weiters sollen auch weitere Module (Elektronik, Sensoren, Reinigungseinrichtung, etc.) direkt in der Nachführeinheit untergebracht werden können, um vor Umwelteinflüssen (z.B. Sandstürmen, Hagel) geschützt zu sein. Weiters soll es gemäß einer weiteren Aufgabe der Erfindung möglich sein, bei Ausfall der Nachführung, etwa aufgrund eines schadhaften Motors, die Solarkollektoren und/oder -zellen mit per Hand in die Schutzposition zu bringen. Die Erfindung soll weiters, trotz der geschützten Unterbringung kritischer Komponenten, eine unkomplizierte Wartung dieser Komponenten ermöglichen. Weitere Aufgaben der Erfindung ergeben sich aus der Beschreibung.

Eine Aufgabe der Erfindung wird gelöst durch eine Nachführeinheit für eine Solaranlage. Die Nachführeinheit umfasst dabei eine Verteilereinheit, die Verteilereinheit umfassend zumindest einen ersten Leitungsabschnitt mit einem ersten Drehblock, welcher erste Drehblock zur Herstellung einer fluidischen Verbindung zwischen erstem Leitungsabschnitt und einem Basiselement, insbesondere Steher, der Solaranlage eingerichtet ist, sowie einen zweiten Leitungsabschnitt mit einem zweiten Drehblock, welcher zweite Drehblock zur Herstellung einer fluidischen Verbindung zwischen zweitem Leitungsabschnitt und einem ersten Tragarm der Solaranlage eingerichtet ist, wobei der erste Leitungsabschnitt drehbar mit dem ersten Drehblock verbunden ist und wobei der zweite Leitungsabschnitt drehbar mit dem zweiten Drehblock verbunden ist. Somit ist eine Verteilereinheit geschaffen, die es ermöglicht, eine anschlussfertige Nachführeinheit für eine Solaranlage bereitzustellen, die auf einfache und unkomplizierte Weise installiert werden kann. Insbesondere ermöglichen die drehbar mit den Leitungsabschnitten verbundenen Drehblöcke, welche Drehblöcke mit auf Leitungsanschlüsse der externen Leitungen abgestimmte Anbindungsabschnitte (Anbindungsflansche) ausgestattet sein können, einerseits eine einfache und dichte Verbindung mit externen Leitungen, insbesondere hydraulischen oder dampfführenden Leitungen des Basiselementes, auf dem die Verteilereinheit montiert ist, sowie mit entsprechenden Leitungen des ersten Tragarms der Solaranlage, an welchem Tragarm die Solarkollektoren oder -zellen montiert sind; andererseits ist durch die drehbare und dichte Anbindung der Drehblöcke an die jeweiligen Leitungsabschnitte der Verteilereinheit auch die Möglichkeit geschaffen, die externen Leitungen drehstarr (bzw. drehfest) mit den Drehblöcken zu verbinden, sodass weder die externen Leitungen noch die Leitungsabschnitte der Verteilereinheit selbst flexibel ausgebildet sein müssen, um die im Betriebszustand der nachgeführten Solaranlage stattfinden Drehungen zu ermöglichen. Bei diesen Drehungen handelt es sich um Drehungen des Basiselementes relativ zur Verteilereinheit (Nachführung in Bezug auf Azimut), sowie um Drehungen des ersten Tragarms relativ zur Verteilereinheit (Nachführung in Bezug auf Sonnenhöhe).

Gemäß einer bevorzugten Ausführungsform der Erfindung weist die Verteilereinheit einen dritten Leitungsabschnitt mit einem dritten Drehblock auf, welcher dritte Drehblock zur Herstellung einer fluidischen Verbindung zwischen drittem Leitungsabschnitt und einem zweiten Tragarm der Solaranlage eingerichtet ist, wobei der dritte Leitungsabschnitt drehbar mit dem dritten Drehblock verbunden ist. Dies ermöglicht die Verwendung der erfindungsgemäßen Verteilereinheit im Zusammenhang mit Nachführeinheiten für Solaranlagen mit zwei Tragarmen. Durch die drehbare Verbindung des dritten Drehblocks mit dem dritten Leitungsabschnitt ist gewährleistet, dass der zweite Tragarm in eine Drehstellung gebracht werden kann, welche Drehstellung unabhängig von einer Drehstellung des ersten Tragarms gewählt werden kann. Im Übrigen treffen sämtliche in Bezug auf den zweiten Leitungsabschnitt, den zweiten Drehblock und/oder den ersten Tragarm getätigten Aussagen auch auf den dritten Leitungsabschnitt, den dritten Drehblock und/oder den zweiten Tragarm zu. Erster Leitungsabschnitt und zweiter Leitungsabschnitt können einen Winkel zwischen 0° und 360° miteinander einschließen, vorzugsweise einen Winkel von etwa 90°. Erster Leitungsabschnitt und dritter Leitungsabschnitt können ebenfalls einen Winkel zwischen 0° und 360° miteinander einschließen, vorzugsweise einen Winkel von 270°. Zweiter und dritter Leitungsabschnitt können ebenfalls einen Winkel zwischen 0° und 360° miteinander einschließen, vorzugsweise einen Winkel von 180°.

Gemäß einer bevorzugten Ausführungsform der Erfindung ist der erste Leitungsabschnitt schwimmend in dem ersten Drehblock und/oder der zweite Leitungsabschnitt schwimmend in dem zweiten Drehblock und/oder der dritte Leitungsabschnitt schwimmend in dem dritten Drehblock gelagert. Durch die schwimmende Lagerung der Leitungsabschnitte in ihren jeweiligen Drehblöcken ist gewährleistet, dass Wärmedehnungen der Leitungsabschnitte, der Drehblöcke und/oder der externen Leitungen (bzw. etwaiger Verbindungselemente) spannungsfrei aufgenommen werden können. Die Verteilereinheit wird damit geeignet, in Verbindung mit einem breiten Betriebstemperaturbereich verwendet zu werden. Insbesondere wird es möglich, Heißdampf mit bis zu 400°C intern über die Verteilereinheit abzuführen bzw. umzuleiten.

Gemäß einer bevorzugten Ausführungsform der Erfindung ist die Verteilereinheit als T-Stück ausgebildet, dessen Stamm den ersten Leitungsabschnitt und dessen Arme den zweiten Leitungsabschnitt und den dritten Leitungsabschnitt der Verteilereinheit ausbilden. Dadurch ergibt sich eine besonders einfache und kompakte Ausgestaltung der Verteilereinheit, nämlich in Form von drei an einem Schnittpunkt miteinander verbundenen Leitungsabschnitten. Am Schnittpunkt der Leitungsabschnitte, welcher Schnittpunkt hier mit dem Schnittpunkt des Stammes und der beiden Arme des Buchstabens "T" zusammenfällt, sind die einzelnen Leitungsabschnitte fluidisch miteinander verbunden. Am Schnittpunkt kann darüber hinaus eine geeignete Aufteilung der im ersten Leitungsabschnitt geführten Leitungen oder Ströme auf den zweiten und/oder dritten Leitungsabschnitt - und umgekehrt - erfolgen.

Gemäß einer bevorzugten Ausführungsform der Erfindung ist zumindest ein Leitungsabschnitt, vorzugsweise sind sämtliche Leitungsabschnitte, der Verteilereinheit als ein Rohr-in-Rohr-System mit einem inneren Rohr und einem äußeren Rohr ausgebildet, wobei zwischen innerem Rohr und äußerem Rohr ein Ringspalt ausgebildet ist, um einen Vorlauf und einen Rücklauf eines Heizkreises zu führen. Insbesondere können sowohl das innere Rohr als auch das äußere Rohr in oder an jedem der Drehblöcke individuell schwimmend gelagert sein. Alternativ kann jeweils nur das innere bzw. äußere Rohr in oder an den Drehblöcken schwimmend gelagert sein, während das äußere bzw. innere Rohr im oder am jeweils selben Drehblock auf andere Weise gelagert ist. Auch ist es grundsätzlich möglich, dass der erste Leitungsabschnitt am ersten Drehblock beispielsweise nur mit dem inneren Rohr, der zweite Leitungsabschnitt am zweiten Drehblock beispielsweise nur mit dem äußeren Rohr und der dritte Leitungsabschnitt am dritten Drehblock beispielsweise nur mit dem inneren Rohr schwimmend gelagert ist; auch sämtliche andere Permutationen dieser Situation sind denkbar. Auf diese Weise kann eine optimale Lagerung der Verteilereinheit an den (Anschlüssen der) externen Leitungen des Basiselements, insbesondere des Stehers, und/oder des ersten Tragarms und/oder des zweiten Tragarms gewährleistet werden. Außerdem kann durch das Rohr-in-Rohr-System eine besonders effiziente und platzsparende Führung zweier Teilströme - etwa Vor- und Rücklauf - von dem oder den Tragarmen zum Basiselement, insbesondere Steher, erreicht werden. Die an Endabschnitten der einzelnen Leitungsabschnitte drehbar mit diesen befestigten Drehblöcke können dabei eine zusätzliche Funktion erfüllen, nämlich die Aufteilung der in dem Rohr-in-Rohr-System geführten Teilströme auf zwei oder mehrere Auslässe, welche Auslässe mit den (Leitungsanschlüssen der) externen Leitungen des Basiselementes und/oder der Tragarme (oder des Tragarms) kompatible sind. Die Drehblöcke erfüllen hier also eine Adapter-Funktion und ermöglichen die Verwendung der erfindungsgemäßen Verteilereinheit in Verbindung mit unterschiedlichsten (Leitungsanschlüssen der) externen Leitungen, wobei jedoch stets das Rohr-in-Rohr-System dieser Ausführungsvariante verwendet werden kann.

Gemäß einer bevorzugten Ausführungsform der Erfindung weist der erste Drehblock Mittel zur Herstellung einer starren (drehfesten, drehstarren) Verbindung mit dem Basiselement, insbesondere dem Steher, und/oder der zweite Drehblock Mittel zur Herstellung einer starren (drehfesten, drehstarren) Verbindung mit dem ersten Tragarm und/oder der dritte Drehblock Mittel zur Herstellung einer starren (drehfesten, drehstarren) Verbindung mit dem zweiten Tragarm aufweist. Hierzu können einzelne oder sämtliche der Drehblöcke mit entsprechenden Anbindungsflanschen oder entsprechend ausgebildeten Stirnseiten ausgebildet sein, mittels derer eine starre und dichte Verbindung mit den jeweiligen (Leitungsanschlüssen der) externen Leitungen des Basiselementes, insbesondere Stehers, des ersten Tragarms und/oder des zweiten Tragarms hergestellt werden kann. Beispielsweise sind die Stirnseiten eben ausgeführt und weisen - neben den Ein- und Auslässen für die jeweiligen Leitungen - Ausnehmungen zur Aufnahme von Befestigungselementen, beispielsweise Schrauben, auf, mittels welcher Befestigungselemente die (Leitungsanschlüsse der) externen Leitungen an dem jeweiligen Drehblock befestigt werden können.

Gemäß einer bevorzugten Ausführungsform der Erfindung weist der erste Drehblock und/oder der zweite Drehblock und/oder der dritte Drehblock jeweils eine Hauptdichtung zur Abdichtung des äußeren Rohrs sowie eine Nebendichtung zur Abdichtung des inneren Rohrs auf. Somit können das äußere Rohr und das innere Rohr mit jeweils unterschiedlicher Länge in den jeweiligen Drehblock hineinragen, was Vorteile hinsichtlich der Designmöglichkeiten des Drehblocks und der im Drehblock notwendigen fluidischen Führungen bzw. Umlenkungen, insbesondere für Vor- und Rücklauf, mit sich bringt. Zudem ermöglicht diese Ausführungsform eine besonders einfache Möglichkeit der schwimmenden Lagerung des inneren und/oder äußeren Rohrs innerhalb des jeweiligen Drehblocks, nämlich mittels der Haupt- und/oder Nebendichtungen.

Gemäß einer bevorzugten Ausführungsform der Erfindung vermittelt die Hauptdichtung die schwimmende Lagerung des äußeren Rohrs und/oder die Nebendichtung die schwimmende Lagerung des inneren Rohrs. Dadurch kann eine besonders effiziente und sichere Lagerung des jeweiligen Leitungsabschnitts in dem jeweiligen Drehblock sichergestellt werden. Je nach Anforderungsprofil, etwa hinsichtlich Druck und/oder Temperatur, können Haupt- und Nebendichtung jeweils entsprechend ausgebildet sein, um das innere Rohr bzw. das äußere Rohr optimal aufnehmen und sicher lagern zu können. Beispielsweise können Haupt- und Nebendichtungen aus unterschiedlichen Materialien gefertigt sein, wodurch sich Kosteneinsparungen erzielen lassen.

Gemäß einer bevorzugten Ausführungsform der Erfindung umfasst die Hauptdichtung eine das äußere Rohr zumindest abschnittsweise umschließende Hülse sowie vorzugsweise ein an einem Ende des äußeren Rohres angeordnetes Dichtelement, insbesondere einen O-Ring. Die Hülse, die beispielsweise als Teflonbuchse ausgebildet sein kann, könnte die Dichtaufgabe der Hauptdichtung vollständig übernehmen, sofern die Toleranzen und die Oberflächengüte auf die jeweiligen Anforderungen (etwa hinsichtlich Druck und Temperatur) abgestimmt sind. Durch die hohe Temperatur und die Einbauvorspannung kann es zu Materialveränderungen (Schrumpfen) kommen, was mit der Zeit zu Undichtigkeiten führen kann. Ein zusätzliches, insbesondere aus Elastomer gefertigtes Dichtelement, das beispielsweise als O-Ring oder Quad-Ring ausgebildet sein kann, behält seine Flexibilität sehr lange und gegebenenfalls auch bei hohen Temperaturen und Drücken bei, wodurch die gewünschte Abdichtung auf lange Zeit gesichert werden kann. Es ist aber auch denkbar, die (Führungs-) Hülse und das zusätzliche Dichtelement (Elastomerdichtung) einstückig auszuführen; bzw. kann das Dichtelement entfallen, wenn die Hülse entsprechend ausgebildet ist.

Gemäß einer bevorzugten Ausführungsform der Erfindung ist der erste Drehblock und/oder der zweite Drehblock und/oder der dritte Drehblock jeweils von einer Ummantelungsbuchse umgeben, wobei die Ummantelungsbuchse drehstarr mit dem jeweiligen Drehblock verbunden, aber gegenüber dem jeweiligen Leitungsabschnitt drehbar ist. Dadurch, dass die jeweilige Ummantelungsbuchse die Rotations- und gegebenenfalls Axialbewegungen des jeweiligen Drehblocks mitmacht, bilden Drehblock und zugeordnete Ummantelungsbuchse eine Einheit, die - bezogen auf den jeweiligen Leitungsabschnitt - eine Relativbewegung ausführt. Da somit keine Befestigung der Ummantelungsbuchse an dem jeweiligen Leitungsabschnitt erforderlich ist, ermöglicht dies einen besonders einfachen und kostengünstigen Aufbau der erfindungsgemäßen Verteilereinheit. Außerdem ermöglicht die fixe Anordnung von Drehblock und jeweiliger Ummantelungsbuchse relativ zueinander bzw. die Befestigung der Ummantelungsbuchse an dem jeweiligen Drehblock, vorzugsweise mittels stirnseitiger Schraubverbindung, die Anordnung weiterer Elemente, Leitungen und Vorrichtungen in dem zwischen Drehblock und (Mantel der) Ummantelungsbuchse entstehenden Freiraum. Vorzugsweise ist ein Durchmesser der Ummantelungsbuchse so gewählt, dass im stirnseitig an dem Drehblock anliegenden oder angrenzenden Boden der Ummantelungsbuchse noch ausreichend Platz für Öffnungen zur Durchführung von Leitungen und/oder Kabeln zur Verfügung steht.

Gemäß einer bevorzugten Ausführungsform der Erfindung ist die Ummantelungsbuchse derart an dem jeweiligen Drehblock befestigt, vorzugsweise verschraubt, dass die Hauptdichtung, vorzugsweise mit einem Flansch der Hülse, zwischen Ummantelungsbuchse und dem jeweiligen Drehblock geklemmt ist. Dies ermöglicht eine besonders einfache Lagefixierung der Hauptdichtung innerhalb des Drehblocks und vermittelt zugleich deren erforderliche Sicherung gegen die druckseitig auftretenden Ausschubkräfte, die während des bestimmungsgemäßen Betriebs der Verteilereinheit auf die Hauptdichtung wirken.

Gemäß einer bevorzugten Ausführungsform der Erfindung sind zwischen der Ummantelungsbuchse und dem jeweiligen Drehblock Mittel zur thermischen Isolierung angeordnet. Somit können der im jeweiligen Drehblock verlaufende Teil des Leitungsabschnitts und/oder der jeweilige Drehblock auf einfache Weise thermisch isoliert werden, was den Wirkungsgrad der Solaranlage erhöht.

Gemäß einer bevorzugten Ausführungsform der Erfindung weist der erste Drehblock und/oder der zweite Drehblock und/oder der dritte Drehblock jeweils einen zweiflutigen Anbindungsabschnitt zur fluidischen Verbindung des ersten Drehblocks mit dem Basiselement, insbesondere Steher, und/oder des zweiten Drehblocks mit dem ersten Tragarm und/oder des dritten Drehblocks mit dem zweiten Tragarm auf, wobei vorzugsweise das innere Rohr den Rücklauf und der Ringspalt den Vorlauf führt. Der jeweilige Drehblock lenkt den im inneren bzw. äußeren Rohr geführten Rück- bzw. Vorlauf auf zwei Auslässe um, welche Auslässe im oder am Anbindungsabschnitt, vorzugsweise Anbindungsflansch, austreten, um mit entsprechenden (Anschlüssen für die) externen Leitungen des Basiselementes, insbesondere Stehers, ersten Tragarms und/oder zweiten Tragarms fluidisch verbunden werden zu können. Die Hauptanwendung für Verteilereinheiten mit zweiflutigen Anbindungsabschnitten liegt bei der solaren Erzeugung von Sattdampf. Die Verteilereinheit dieser Ausführungsform kann ohne besonderen Aufwand auf Systemdrücke bis zu 50 bar und, je nach Werkstoffauswahl, auf eine Dampfdrucktemperatur von bis zu 260°C ausgelegt werden.

Gemäß einer bevorzugten Ausführungsform der Erfindung weist der erste Drehblock und/oder der zweite Drehblock und/oder der dritte Drehblock jeweils einen dreiflutigen Anbindungsabschnitt zur fluidischen Verbindung des ersten Drehblocks mit dem Basiselement, insbesondere Steher, und/oder des zweiten Drehblocks mit dem ersten Tragarm und/oder des dritten Drehblocks mit dem zweiten Tragarm auf, wobei vorzugsweise das innere Rohr den Vorlauf und der Ringspalt den Rücklauf führt. Das zu den zweiflutigen Anbindungsabschnitten Gesagte trifft sinngemäß auch auf diese Ausführungsform zu. Ausführungsformen mit dreiflutigen Anbindungsabschnitten ermöglichen Insbesondere den Einsatz in Solaranlagen mit hohen Volumenströmen, wie zum Beispiel im Falle der der Dampfüberhitzung. Insbesondere bei großen Temperaturdifferenzen zwischen Vorlauf und Rücklauf kann es in einer weiteren bevorzugten Ausführungsform der Erfindung vorgesehen sein, das innere Rohr doppelwandig zu gestalten, vorzugsweise mit einem Vakuumringspalt zu versehen, sodass eine Temperaturanhebung in den Kollektoren aufgrund von Wärmebrücken vermieden wird.

Eine Aufgabe der Erfindung wird gelöst durch die Nachführeinheit für eine Solaranlage, die Nachführeinheit umfassend zumindest ein Gehäuse mit einem Gehäuseinneren, welches Gehäuse zumindest zur bestimmungsgemäßen Aufnahme der erfindungsgemäßen Verteilereinheit, und vorzugsweise auch zur Aufnahme weiterer Komponenten wie Drehdurchführungen, Elektrik, Schleifringe, Kabel, Schläuche und/oder Steuereinheit, im Gehäuseinneren eingerichtet ist und welches Gehäuse durch zumindest einen Träger bzw. ein Traggestell und eine lösbar mit dem Traggestell verbundene Abdeckung ausgebildet ist, sowie zumindest ein erstes Getriebe zur Drehung um eine Vertikalachse und ein zweites Getriebe zur Drehung um eine Horizontalachse, wobei die Verteilereinheit im Gehäuseinneren, vorzugsweise in Bezug auf die Vertikalachse und die Horizontalachse achszentriert, angeordnet ist, wobei ein Getriebegehäuse des ersten Getriebes drehstarr mit dem Traggestell verbunden ist und ein Abtrieb des ersten Getriebes von außen zugänglich ist, um mit einem Basiselement, insbesondere Steher, mittelbar oder unmittelbar verbunden zu werden, und wobei ein Getriebegehäuse des zweiten Getriebes drehstarr mit dem Traggestell verbunden ist und ein Abtrieb des zweiten Getriebes von außen zugänglich ist, um mittelbar oder unmittelbar mit einem ersten Tragarm der Solaranlage verbunden zu werden. Bestimmungsgemäße Aufnahme bedeutet in diesem Zusammenhang, dass die Aufnahme der Verteilereinheit, oder der weiteren Komponenten, derart erfolgt, dass die Herstellung sämtlicher Anschlüsse, insbesondere fluidischer Anschlüsse, und Kupplungen zwischen Verteilereinheit bzw. jeweiliger Komponente und einer Peripherie, insbesondere den externen Leitungen des Basiselements bzw. Stehers und/oder des ersten Tragarms und/oder des zweiten Tragarms, vorzugsweise im Gehäuseinneren selbst, hergestellt werden können. Die erfindungsgemäße Nachführeinheit zeichnet sich zunächst durch ihre eigenständige, modulare Ausbildung und insbesondere durch das Gehäuse aus, welches Gehäuse durch das Traggestell und die lösbardamit verbundene Abdeckung gebildet ist. Im Gehäuseinneren können kritische Elemente der Solaranlage - also solche Elemente, die vor äußeren Krafteinwirkungen und Witterungseinflüssen geschützt werden sollten, um den Wartungsaufwand der Solaranlage möglichst niedrig zu halten - geschützt untergebracht werden, sind aber durch Entfernen der Abdeckung dennoch einfach zugänglich. Neben dem damit einhergehenden verringerten Wartungsaufwand zeichnet sich die erfindungsgemäße Nachführeinheit insbesondere auch durch die beiden Getriebe (erstes Getriebe, zweites Getriebe) aus, die jeweils direkt und drehfest an der Nachführeinheit montiert sind und deren Abtriebe jeweils von dem Gehäuseinneren wegweisen, also nach außen gerichtet sind. Weitere Getriebe, die bei aus dem Stand der Technik bekannten Solaranlagen etwa am Basiselement bzw. am Steher, oder an einem oder beiden der Tragarme vorgesehen sein müssen, sind daher nicht erforderlich; die erfindungsgemäße Nachführeinheit benötigt keine weiteren Getriebe für eine zweiachsige Nachführung. Motoreinheiten, etwa Schneckenantriebe, können an Antrieben der der Getriebe montiert sein.

Gemäß einer bevorzugten Ausführungsform der Erfindung ist das erste Getriebe und das zweite Getriebe jeweils als ein Drehkranzgetriebe ausgebildet. Drehkranzgetriebe haben einerseits den Vorteil, dass sie sie eine zentrische Öffnung aufweisen, die erfindungsgemäß zur Durchführung von Leitungen bzw. Leitungsanschlüssen bzw. Leitungsflanschen genutzt werden, um die erforderlichen Anschlüsse und Kupplungen zwischen Basiselement bzw. Steher, erstem und/oder zweitem Tragarm herzustellen. Andererseits ist gegenüber den im Stand der Technik eingesetzten Spindeltrieben der Vorteil gegeben, dass keine Faltenbälge zur Abdichtung verwendet werden müssen, was den Wartungsaufwand einer mit der erfindungsgemäßen Nachführeinheit ausgestatteten Solaranlage weiter reduziert. Ein weiterer Vorteil besteht darin, dass die Drehbewegung durch den erfindungsgemäßen Einsatz der Drehkranzgetriebe nicht mehr eingeschränkt ist, wogegen bei Spindeltrieben Drehungen um maximal +/- 60° möglich sind.

Gemäß einer bevorzugten Ausführungsform der Erfindung weist das Traggestell zumindest eine erste Durchführungsöffnung zur Herstellung von Anschlüssen mit dem Basiselement, insbesondere dem Steher, sowie eine zweite Durchführungsöffnung zur Herstellung von Anschlüssen mit dem ersten Tragarm auf, wobei die erste Durchführungsöffnung die Vertikalachse und die zweite Durchführungsöffnung die Horizontalachse umschließt. Vorzugsweise ist die erste Durchführungsöffnung fluchtend, besonders bevorzugt koaxial, mit der zentrischen Öffnung des ersten Getriebes und/oder die zweite Durchführungsöffnung fluchtend, besonders bevorzugt koaxial, mit der zentrischen Öffnung des zweiten Getriebes angeordnet. Fluchtend bedeutet in diesem Zusammenhang, dass Durchführungsöffnung und zentrische Öffnung jeweils zumindest teilweise überlappen, um die Durchführung von Leitungen zu ermöglichen. Koaxial bedeutet in diesem Zusammenhang, dass die (Symmetrie-)Achsen von Durchführungsöffnung und zentrischer Öffnung jeweils zusammenfallen. Insbesondere ist die Symmetrieachse der ersten Durchführungsöffnung die Vertikalachse und Symmetrieachse der zweiten Durchführungsöffnung die Horizontalachse. Bei diesen beschriebenen Ausführungsformen ist die Herstellung der erforderlichen Anschlüsse und Kupplungen zwischen Basiselement, erstem Tragarm und/oder zweitem Tragarm einerseits und den im Gehäuseinneren angeordneten Komponenten, insbesondere der Verteilereinheit, besonders einfach möglich, was die Installation der erfindungsgemäßen Nachführeinheit und deren Benutzerfreundlichkeit maßgeblich verbessert.

Gemäß einer bevorzugten Ausführungsform der Erfindung weist das Traggestell eine dritte Durchführungsöffnung zur Herstellung von Anschlüssen mit dem zweiten Tragarm auf, wobei die dritte Durchführungsöffnung die Horizontalachse umschließt, vorzugsweise die Horizontalachse die Symmetrieachse der dritten Durchführungsöffnung darstellt. Zweite und dritte Durchführungsöffnung können demnach koaxial, nämlich insbesondere um die Horizontalachse zentriert, und an einander gegenüberliegenden Seiten des Traggestells angeordnet sein. Die erfindungsgemäße Nachführeinheit ist somit zum Einsatz in Solaranlagen mit zwei Tragarmen geeignet.

Gemäß einer bevorzugten Ausführungsform der Erfindung weist die Nachführeinheit einen Schwenkbügel zur Aufnahme des ersten Tragarms und/oder des zweiten Tragarms auf, wobei der Schwenkbügel im Bereich einer ersten Durchgangsöffnung dazu eingerichtet ist, mittels des ersten Tragarms mit dem Abtrieb des zweiten Getriebes verbunden zu werden, und wobei der Schwenkbügel im Bereich einer zweiten Durchgangsöffnung dazu eingerichtet ist, den zweiten Tragarm aufzunehmen bzw. mittels des zweiten Tragarms mit dem Gehäuse verbunden zu werden, sodass die zweite Durchführungsöffnung des Traggestells zumindest abschnittsweise mit der ersten Durchgangsöffnung überlappt, vorzugsweise koaxial mit dieser ausgerichtet ist, und die dritte Durchführungsöffnung des Traggestells zumindest abschnittsweise mit der zweiten Durchgangsöffnung überlappt, vorzugsweise koaxial mit dieser ausgerichtet ist. Vorzugsweise bildet die Horizontalachse die Symmetrieachse der ersten und der zweiten Durchgangsöffnung. Der erfindungsgemäße Schwenkbügel ermöglicht demnach eine synchrone Rotation der beiden Tragarme (erster Tragarm, zweiter Tragarm) durch Betätigung des zweiten Getriebes.

Gemäß einer bevorzugten Ausführungsform der Erfindung weist das Traggestell im Bereich der dritten Durchführungsöffnung einen Lagerbock auf, um eine Hohlwelle eines Zwischenflansches aufzunehmen, welcher Zwischenflansch im Betriebszustand zur Verbindung des zweiten Tragarms mit dem Gehäuse zwischen zweitem Tragarm und Schwenkbügel angeordnet ist. Der Lagerbock kann dabei ein separater Bauteil sein, der beispielsweise mittels Schrauben an dem Traggestell befestigt oder mit diesem verschweißt wird. Alternativ kann das Traggestell als Gussteil gefertigt sein, vorzugsweise mittels des Aluminiumdruckgussverfahrens; in diesem Fall kann der Lagersitz für die Hohlwelle direkt aus dem Druckgussteil ausarbeitet sein bzw. können der Lagerbock und das Traggestell einstückig miteinander gefertigt sein. Der erfindungsgemäße Lagerbock ermöglicht eine besonders stabile Lagerung des zweiten Tragarms an dem Gehäuse und erhöht somit die Betriebssicherheit einer Solaranlage, die mit der erfindungsgemäßen Nachführeinheit ausgestattet ist.

Gemäß einer bevorzugten Ausführungsform der Erfindung weist der Lagerbock eine Rotationsdichtung auf, um das Gehäuse im Bereich der Kontaktierung des Schwenkbügels abzudichten. Dadurch lässt sich der Wartungsaufwand der erfindungsgemäßen Nachführeinheit und entsprechender Solaranlagen, die damit ausgestattet sind, weiter reduzieren. Die im Gehäuseinneren untergebrachten Komponenten, insbesondere die Verteilereinheit, können somit noch zuverlässiger vor Verschleiß, Beschädigung und Verschmutzung geschützt werden.

Erfindungsgemäß ist im Gehäuseinneren die Verteilereinheit gemäß einer der oben beschriebenen Ausführungsformen aufgenommen. Vorzugsweise ist die Verteilereinheit in Bezug auf die Vertikalachse und die Horizontalachse achszentriert im Gehäuseinneren aufgenommen. Somit weist die erfindungsgemäße Nachführeinheit sämtliche der oben im Zusammenhang mit der Verteilereinheit beschriebenen Vorteile auf. Insbesondere erlaubt die Nachführeinheit dieser Ausführungsform eine besonders einfache und rasche Herstellung sämtlicher fluidischer und gegebenenfalls elektrischer Anschlüsse, da hierfür lediglich die entsprechenden (Anschlüsse der) externen Leitungen des Basiselements bzw. Stehers, des ersten Tragarms und/oder des zweiten Tragarms mit den korrespondierenden Drehblöcken verbunden werden müssen. Somit ist es nicht mehr erforderlich, diverse Schläuche, Leitungen und Kabel zunächst entsprechend zu positionieren und anschließend einzeln miteinander zu verbinden; vielmehr können sämtliche Anschlüsse und Kupplungen beispielsweise durch Steckverbindungen in einem Arbeitsschritt hergestellt werden. Beispielsweise lassen sich sämtliche Vor- und Rücklaufleitungen des Basiselements bzw. Stehers mit den entsprechenden Leitungen der
Nachführeinheit fluidisch verbinden, indem der Anbindungsabschnitt oder -flansch des ersten Drehblocks mit dem korrespondierenden Anschluss(flansch) des Basiselements bzw. Stehers gekoppelt wird; Analoges gilt für den ersten Tragarm und den zweiten Drehblock, und den zweiten Tragarm und den dritten Drehblock.

Gemäß einer bevorzugten Ausführungsform der Erfindung ist im Gehäuseinneren eine Reinigungseinrichtung angeordnet, welche Reinigungseinrichtung Mittel zur Versorgung von Reinigungsmittelzuleitungen des ersten Tragarms und/oder des zweiten Tragarms aufweist. In anderen Worten: Die Nachführeinheit weist eine im Gehäuseinneren aufgenommene Vorrichtung zur Verteilung bzw. Weiterleitung von aus dem Basiselement bzw. Steher zugeführten Reinigungswasser in dafür vorgesehene Leitungen der beiden Tragarme auf. Dadurch lässt sich der Wartungsaufwand der Nachführeinheit bzw. einer damit ausgestatteten Solaranlage noch weiter reduzieren.

Gemäß einer bevorzugten Ausführungsform der Erfindung umfassen die Mittel zur Versorgung von Reinigungsmittelzuleitungen zumindest einen flexiblen Schlauch, zumindest einen verdrehbaren Schlauchanschluss und/oder zumindest eine Drehdurchführung, wobei vorzugsweise die Drehdurchführung stirnseitig an der Ummantelungsbuchse des ersten Drehblocks gelagert ist und ein Leitungsstutzen der Drehdurchführung zwischen erstem Drehblock und dessen Ummantelungsbuchse verläuft und durch eine Öffnung im stirnseitigen Boden dieser Ummantelungsbuchse geführt ist, um eine fluidische Verbindung der Reinigungseinrichtung mit einem korrespondierenden Anschluss des Basiselements, insbesondere des Stehers, zu ermöglichen. Dadurch ist eine Reinigungseinrichtung bzw. Vorrichtung zur Verteilung des aus dem Steher zugeführten Reinigungswassers in die Leitungen der beiden Tragarme geschaffen, die besonders stabil gelagert und platzsparend ausgebildet ist, dabei aber auf besonders einfache und zuverlässige Weise mit den korrespondierenden Anschlüssen des Basiselements bzw. des Stehers verbunden werden kann.

Gemäß einer bevorzugten Ausführungsform der Erfindung ist an einer Außenseite der Ummantelungsbuchse des ersten Drehblocks, des zweiten Drehblocks und/oder des dritten Drehblocks ein Drehgehäuse gelagert, wobei das Drehgehäuse vorzugsweise am Traggestell befestigt ist, und wobei das Drehgehäuse Schleifringe und Schleifkontakte und/oder flexible Kabelstränge beherbergt, insbesondere zur Versorgung einer Verteilerbox und/oder einer Photovoltaikanlage. Somit ist eine besonders platzsparende und funktionsoptimierte Unterbringung elektrischer Komponenten ermöglicht. Durch die Anordnung des Drehgehäuses an der Mantelaußenseite der Ummantelungsbuchse, die vorzugsweise zylindrisch ausgebildet ist, wird eine stabile Lagerung sichergestellt dabei aber keine anderen Komponenten, etwa die Reinigungseinrichtung, kontaktiert oder in ihrer Funktionsweise gestört. Zudem ermöglicht die Nähe zum Traggestell eine zuverlässige Lagefixierung des Drehgehäuses.

Gemäß einer bevorzugten Ausführungsform der Erfindung ist im Gehäuseinneren eine Verteilerbox mit einem oder mehreren Anschlüssen, vorzugsweise Steckanschlüssen, angeordnet, welche Verteilerbox vorzugsweise am Traggestell befestigt und/oder zwischen zwei Teilen des Drehgehäuses geklemmt ist. Somit können sämtliche elektrische Anschlüsse für den Betrieb der Solaranlage in einer geschützten Umgebung, nämlich im Gehäuseinneren, hergestellt und sämtliche Komponenten der Solaranlage bzw. der Nachführeinheit elektrisch versorgt werden.

Gemäß einer bevorzugten Ausführungsform der Erfindung ist im Gehäuseinneren eine elektronische Steuereinheit mit Anschlüssen für Aggregate, insbesondere Motoren der Getriebe und/oder Sensoren, angeordnet, welche Steuereinheit vorzugsweise über einen oder mehrere Anschlüsse, insbesondere Steckanschlüsse, mit der Verteilerbox elektrisch verbunden ist. Bei dieser Ausführungsform ist auch die Steuereinheit im geschützten Gehäuseinneren untergebracht; da sich die wesentlichen elektrischen Komponenten, insbesondere Motoren und Sensoren ebenfalls in oder an der Nachführeinheit - und nicht etwa am Basiselement bzw. Steher, oder den Tragarmen - befinden, führen diese im Zuge der zweiachsigen Nachführbewegungen keine Relativbewegungen zur Steuereinheit aus. Damit können vergleichsweise wenig flexible aber umso stabilere Verkabelungen zur Verbindung dieser Komponenten mit der Steuereinheit eingesetzt werden; gleichzeitig können die benötigten Kabellängen auf ein absolutes Minimum reduziert werden.

Gemäß einer bevorzugten Ausführungsform der Erfindung sind im Gehäuseinneren ein oder mehrere Sensoren angeordnet, und vorzugsweise am Traggestell lagefixiert, welche Sensoren dazu eingerichtet sind, über winkelkodierte Ringe, die an den Ummantelungsbuchsen des ersten Drehblocks, des zweiten Drehblocks und/oder des dritten Drehblocks befestigt sind, Winkelinformationen auszulesen und an die Steuereinheit weiterzuleiten. Auf diese Weise kann eine besonders zuverlässige Nachführung bzw. Regelung der Nachführbewegungen der Solaranlage sichergestellt werden. Insbesondere wird bei dieser Ausführungsform ausgenützt, dass die Ummantelungsbuchsen drehfest mit den jeweiligen Drehblöcken der Verteilereinheit verbunden, und diese Drehblöcke im Betriebszustand wiederum drehfest mit den (Anschlüssen der) externen Leitungen des Basiselementes bzw. Stehers, ersten Tragarms und/oder zweiten Tragarms verbunden sind. Damit entspricht die Drehstellung der Ummantelungsbuchse stets der aktuellen Drehstellung des jeweiligen Basiselements bzw. Stehers oder Tragarms. Alternativ könnte auch die Ummantelungsbuchse selbst winkelcodiert sein, der winkelcodierte Ring als weggelassen werden.

Eine Aufgabe der Erfindung wird gelöst durch eine Solaranlage umfassend zumindest eine mit einer erfindungsgemäßen Verteilereinheit ausgestattete Nachführeinheit nach einer der oben beschriebenen Ausführungsformen, ein Basiselement, insbesondere einen Steher, sowie zumindest einen ersten Tragarm mit zumindest einem daran befestigten Solarkollektor, insbesondere einem spiegelreflektierenden Solarkollektor, und/oder Solarzellen, dadurch gekennzeichnet, dass der erste Drehblock abdichtend und drehstarr mit Leitungen des Basiselements, insbesondere des Stehers, und der zweite Drehblock drehstarr, und vorzugsweise abdichtend, mit Leitungen des ersten Tragarms fluidisch verbunden ist. Auf diese Weise ist eine Solaranlage bereitgestellt, die sämtliche der in Bezug auf die Verteilereinheit und die Nachführeinheit beschriebenen Vorteile mit sich bringt. Insbesondere zeichnet sich die Solaranlage durch äußerst geringen Wartungsaufwand aus, da hydraulische oder dampfführende Leitungen innerhalb des Basiselements bzw. Stehers und innerhalb des Tragarms geführt und mittels der in der Nachführeinheit geschützt aufgenommenen Verteilereinheit umgelenkt und aufgeteilt werden. Diese Leitungen können daher vor sämtlichen äußeren Einflüssen geschützt zu den Solarkollektoren und/oder -zellen der Solaranlage geführt werden.

Gemäß einer bevorzugten Ausführungsform der Erfindung umfasst die Solaranlage einen zweiten Tragarm mit zumindest einem daran befestigten Solarkollektor, insbesondere zumindest einen spiegelreflektierenden Solarkollektor, und/oder zumindest einer daran befestigten Solarzelle umfasst, wobei der dritte Drehblock drehstarr, und vorzugsweise abdichtend, mit Leitungen des zweiten Tragarms fluidisch verbunden ist. Somit ist eine Solaranlage mit zwei Tragarmen geschaffen, deren beide Tragarme in der beschriebenen Weise um die Horizontalachse rotiert werden können, um die Solarkollektoren und/oder -zellen hinsichtlich der Sonnenhöhe nachzuführen. Durch den erfindungsgemäßen Schwenkbügel können beide Tragarme synchron bewegt und sicher am Gehäuse der Nachführeinheit gelagert werden. Eine besonders zuverlässige Abdichtung der Nachführeinheit bzw. des Gehäuseinneren an Übergängen zu den Tragarmen kann einerseits durch zumindest eine Rotationsdichtung und andererseits durch zumindest eine Rotationsdichtung des Lagerbocks erreicht werden.

Gemäß einer bevorzugten Ausführungsform der Erfindung ist im Falle zweiflutiger Drehblöcke die fluidische Verbindung mittels zweiflutiger Gegenflansche des Basiselements, insbesondere Stehers, des ersten Tragarms und/oder des zweiten Tragarms hergestellt, welche Gegenflansche an den Anbindungsabschnitten der Drehblöcke, vorzugsweise achszentrierend, besonders bevorzugt exakt achszentrierend, befestigt, insbesondere verschraubt oder verschweißt, sind, wobei vorzugsweise die Gegenflansche über Isolierbacken fix mit dem Basiselement, insbesondere dem Steher, dem ersten Tragarm und/oder dem zweiten Tragarm verbunden oder einstückig mit diesen ausgebildet sind. Zweiflutige Gegenflansche ermöglichen im Falle zweiflutiger Anbindungsflansche oder Stirnseiten der Drehblöcke eine besonders einfache und zeitsparende Herstellung einer fluidischen Verbindung zwischen den Leitungsabschnitten der Verteilereinheit einerseits und den externen Leitungen des Basiselements bzw. Stehers, des ersten Tragarms und/oder des zweiten Tragarms andererseits. Gleichzeitig ermöglichen Flanschverbindungen, also die Verbindung der Anbindungsflansche mit den jeweiligen Gegenflanschen, eine besonders dichte fluidische Verbindung. Die Isolierbacken ermöglichen eine thermische Isolierung der Gegenflansche von den externen Leitungen des Basiselements bzw. Stehers, des ersten Tragarms und/oder des zweiten Tragarms. Besonders bevorzugt sind die Gegenflansche über Dichtelemente an den Anbindungsabschnitten der Drehblöcke befestigt, insbesondere verschraubt.

Gemäß einer bevorzugten Ausführungsform der Erfindung ist im Falle dreiflutiger Drehblöcke die fluidische Verbindung mittels dreiflutiger Gegenflansche des Basiselements, insbesondere Stehers, des ersten Tragarms und/oder des zweiten Tragarms hergestellt, welche Gegenflansche an den Anbindungsabschnitten der Drehblöcke befestigt sind, wobei vorzugsweise die Gegenflansche jeweils über zwei außenliegende Rücklaufleitungen starr mit einer Zwischenplatte verbunden sind und die Zwischenplatten jeweils über Isolierhülsen an Aufnahmen des Basiselements, insbesondere Stehers, des ersten Tragarms und/oder des zweiten Tragarms befestigt sind, welche Aufnahmen insbesondere Führungen für eine kontaktlose Durchführung der zwei außenliegenden Rücklaufleitungen sowie einer innenliegenden Vorlaufleitung aufweisen. Somit lassen sich die im Zusammenhang mit zweiflutigen Gegenflanschen beschriebenen Vorteile auch bei dreiflutigen Gegenflanschen erzielen. Insbesondere kann durch Vermeidung einer Kontaktierung zwischen Zwischenplatte und innenliegender Vorlaufleitung des Basiselements bzw. Stehers, des ersten Tragarms und/oder des zweiten Tragarms einerseits, sowie andererseits durch die Befestigung der Zwischenplatte an der jeweiligen Aufnahme über Isolierhülsen eine thermische Isolierung erreicht werden. Die kontaktlose Führung der Vor- und Rücklaufleitungen im Basiselement bzw. Steher, ersten Tragarm und/oder zweiten Tragarm trägt ebenfalls zu einer thermischen Isolierung der Solaranlage bei und erhöht deren Wirkungsgrad.

Gemäß einer bevorzugten Ausführungsform der Erfindung sind die, insbesondere thermischen, hydraulischen bzw. dampfführenden, Leitungen des Basiselements, insbesondere des Stehers, des ersten Tragarms und/oder des zweiten Tragarms mit den Gegenflanschen abdichtend verbunden, insbesondere verschweißt. Die Verbindung kann beispielsweise über Schraubverbindungen zwischen Anbindungsflanschen oder Stirnseiten der Drehblöcke einerseits und den Gegenflanschen andererseits erzielt werden. So lässt sich der Wirkungsgrad weiter erhöhen und der Wartungsaufwand noch weiter reduzieren.

Gemäß einer bevorzugten Ausführungsform der Erfindung ist das Basiselement, insbesondere der Steher, mit dem Abtrieb des ersten Getriebes verbunden, ist der erste Tragarm im Bereich der ersten Durchgangsöffnung des Schwenkbügels mit dem Schwenkbügel und mit dem Abtrieb des zweiten Getriebes verbunden, und ist der zweite Tragarm, vorzugsweise unter Zwischenlage des Zwischenflansches, im Bereich der zweiten Durchgangsöffnung des Schwenkbügels mit dem Schwenkbügel und dem Gehäuse verbunden. Dadurch erfolgt die strukturelle Lagerung des Basiselements bzw. Stehers, ersten und/oder zweiten Tragarms an der Nachführeinheit. Durch die spezielle Wahl der Befestigung an den Abtrieben der Getriebe sowie an dem Schwenkbügel ist sichergestellt, dass die Nachführung besonders effizient erfolgt, dabei die Solaranlage aber möglichst wartungsfrei betrieben werden kann.

Die vorliegende Erfindung bezieht sich auf eine Verteilereinheit sowie auf eine Nachführeinheit für Solaranlagen mit Solarkollektoren, insbesondere für spiegelkonzentrierende Kollektoren, und/oder Solarzellen, die eine zweiachsige Nachführung der Solaranlage ermöglichen. Die Nachführeinheit kann als eine auslieferfertige Kompakteinheit für unterschiedlichste Anbindungsperipherien bereitgestellt werden. Für beide Drehachsen können Drehkranzgetriebe eingesetzt werden. Das Herzstück bildet die erfindungsgemäße Verteilereinheit, die im Schnittpunkt der beiden Drehachsen für Azimut (Vertikalachse) und Sonnenhöhe (Horizontalachse) in der Nachführeinheit angeordnet sein kann. Je nach Dimensionierung der Strömungsquerschnitte der Leitungsabschnitte der Verteilereinheit, welche Leitungsabschnitte fluidisch miteinander verbunden sind, ist es möglich, Nassdampf, Heißdampf und/oder Kondensat über die Verteilereinheit entlang der Drehachsen zu und von den Solarkollektoren hin- und rückzuführen. Es ist es möglich, die Nachführeinheit modular mit elektrischen Komponenten bzw. Einrichtungen zu vorzusehen, welche Komponenten den Strom aus PV-Kollektoren (z.B. gekühlte Photovoltaikanlagen) über Leitungen der Nachführeinheit entlang der beiden Drehachsen zu leiten. Ebenfalls modular können in der Nachführeinheit Komponenten bzw. Einrichtungen für die Umleitung und Verteilung von Reinigungswasser oder Reinigungsmittel, das zu den Kollektoren geleitet wird, vorgesehen werden. Sämtliche dieser hydraulischen und elektrischen Einrichtungen können die Drehbewegungen um die beiden Dreh- bzw. Nachführachsen in einem abgeschlossenen Innenraum der Nachführeinheit ausführen; in anderen Worten: diese Komponenten und Einrichtungen verändern im Zuge der Nachführbewegungen ihre Relativpositionen relativ zur Nachführeinheit nicht. Die Steuereinheit der Solaranlage und die Sensorik können ebenfalls in diesem Innenraum der Nachführeinheit, also im Gehäuseinneren, angeordnet sein, sodass möglichst wenige Kabelstränge von und zu einer Kollektoranlage zu verlegen sind. Erfindungsgemäß sind alle wesentlichen technischen Komponenten, vorzugsweise sämtliche kritische Komponeten, in einem durch das Gehäuseinnere ausgebildeten Innenraum untergebracht, welcher Innenraum durch eine einfache Abdeckung, die mit dem Traggestell lösbar verbunden ist, geschaffen ist. Die Nachführeinheit hat zumindest zwei, vorzugsweise jedoch drei Flanschaufnahmen (oder Aufnahmeflansche), nämlich eine um die Vertikalachse zentrierte Flanschaufnahme für das Basiselement, welches Basiselement durch einen Mast bzw. Steher ausgebildet sein kann, und zwei weitere um die Horizontalachse zentrierte Flanschaufnahmen für die Trag- bzw. Haltearme. Sämtliche Leitungen können im Inneren der tragenden Rohre bzw. Strukturen (nämlich Basiselement bzw. Steher, erster Tragarm und zweiter Tragarm) verlegt werden und in Isoliermasse eingebettet werden. Die Verteilereinheit ermöglicht grundsätzlich Drehbewegungen um jeden beliebigen Winkel. Um die Horizontalachse kann der Rotationsbereich beispielsweise auf 180° eingeschränkt werden, um Kollisionen mit anderen Teilen der Solaranlage zu verhindern. Um die Vertikalachse kann hingegen eine beliebige Verdrehung (Rundumbewegung) möglich sein.

Eine Einschränkung in der Bewegung können flexible Kabel und Schläuche bilden. Wie gezeigt wird, ist die Drehung um 180° in der Horizontalachse auch mit flexiblen Kabeln und Schläuchen noch zu bewerkstelligen. Die Tragarme können in eine spezielle Schutzposition geschwenkt werden, sodass die Einstrahlflächen, ob nun bei spiegelkonzentrierenden Kollektoren, Flachkollektoren, oder Solarzellen, nach unten, in Richtung Boden oder Untergrund, gerichtet sind.

Um die Vertikalachse ist in einem weiten Breitengradbereich (~23° bis -53°) eine Drehmöglichkeit von bis zu 270° (+/- 135°) zur Azimut-Einstellung bzw. -Nachführung ausreichend. Dies ist mit flexiblen Kabeln und Schläuchen noch zu bewerkstelligen. Ist eine uneingeschränkte Drehmöglichkeit im Azimut gewünscht, so gibt es für die Elektrik eine Variante mit Schleifringkontakten. Für die Zuleitung von Reinigungswasser gibt es ebenfalls eine spezielle Ausführung mit einer Drehdurchführung. Solaranlagen dieser Variante können sich beliebig um die Vertikalache drehen und auf kürzestem Weg in die Ausgangs- und/oder Schutzstellung gebracht werden. In extremen Breitengraden (z.B. Polarkreisnähe, aber auch in Äquatornähe innerhalb von +/- 23°) kann es notwendig sein, die Anlagen auf eine Rundumbewegung auszulegen.

Sämtliche elektrische Leitungen für Sensorik, für die Regelungseinheit und die Antriebe können, vorzugsweise über Steckkontakte, rasch an die ebenfalls in der Nachführeinheit geschützt untergebrachten Verteilerbox angeschlossen werden. Die Erfindung bezieht sich insbesondere auf den getriebetechnischen Aufbau und den stufenweisen modularen Ausbau mit allen weiteren technischen Komponenten.

Ziel dieser Entwicklung ist, eine anschlussfertige Einheit (Nachführeinheit) für sämtliche zuführende bzw. externe Leitungen, die fix in den Tragarmen und dem Steher verbaut und gegebenenfalls isoliert sind, vorzusehen. Dies ermöglicht unter anderem eine Auslegung der erfindungsgemäßen Solaranlage ohne außenliegende Kabel und Leitungen (abgesehen von Kabeln, die aus dem Gehäuseinneren der Nachführeinheit zu den Motoren der Getriebe (erstes und zweites Getriebe) verlaufen, und Kabeln, die von den Tragarmen (erster und zweiter Tragarm) zu den Solarkollektoren und/oder -zellen verlaufen können). Die Verteilereinheit kann im Inneren der Nachführeinheit wärmeisoliert untergebracht sein. Somit kann bei entsprechender Isolierung der Solaranlage, gegebenenfalls bei minimaler Beheizung, ein Einfrieren der Solaranlage bzw. deren Komponenten, vorzugsweise ohne Frostschutzbeigabe, verhindert werden. Dies insbesondere bei spiegel konzentrierenden Kollektoren mit Vakuumtechnologie, die eine sehr geringe Wärmeabstrahlung haben.

Erfindungsgemäß zeichnet sich die Nachführeinheit unter anderem dadurch aus, dass ein Traggestell mit drei Flanschaufnahmen vorgesehen ist, welche Flanschaufnahmen die Durchführungsöffnungen umgebend angeordnet sein können, nämlich eine erste Falnschaufnahme für die Aufnahme des ersten Getriebes zur Drehung um die Vertikalachse, eine zweite Flanschaufnahme für die Aufnahme eines Getriebes zur Drehung um die Horizontalachse und eine dritte Flanschaufnahme für die Aufnahme eines Lagerbocks, welcher Lagerbock fluchtend zur Horizontalachse angeordnet ist. Im Zentrum der (Teilkreise zu den) Flanschaufnahmen können die Durchführungsöffnungen, also ausreichend große Öffnungen für die Durchführung von Anschlüssen, Kupplungen, Anbindungsflanschen, Gegenflanschen, Leitungen und Kabeln vorgesehen. Die Getriebe sind an der Nachführeinheit drehfest montiert und abtriebsseitig nach außen gerichtet. Getriebekörper bzw. -gehäuse und (mittelbar) damit auch die mit dem Antrieb des jeweiligen Getriebes verbundene oder verbindbare Motoreinheit sind starr mit dem Traggestell bzw. Gehäuse der Nachführeinheit verbunden. Für die Aufnahme der Tragarme ist ein massiver Schwenkbügel mit zwei Flanschaufnahmen, welche Flanschaufnahmen jeweils eine der beiden Durchgangsöffnungen umgebend angeordnet sein können, vorgesehen. Das Festlager befindet sich am Abtriebsflansch des zweiten Getriebes und das Loslager am Lagerbock. Die beiden Flanschaufnahmen des Schwenkbügels haben je eine ausreichend große Durchgangsöffnung für die Verlegung bzw. Durchführung der hydraulischen und elektrischen Leitungen sowie von Anschlüssen, Kupplungen, Anbindungsflanschen, Gegenflanschen und Kabeln. Die am zweiten Getriebe angeordnete Flanschaufnahme ist zwischen dem Abtriebsflansch des zweiten Getriebes und dem ersten Tragarm angeordnet. Mit dem Traggestell ist eine Abdeckung lösbar montiert, sodass alle technischen Komponenten (jedenfalls aber die Verteilereinheit sowie etwaige Drehdurchführungen, Elektrik, Schleifringe, Steuereinheit und die Verteilerbox) in einem abgeschlossenen und abgedichteten Raum, dem Gehäuseinneren, geschützt untergerbacht sind.

Die Getriebe können vorzugsweise als Drehkränze bzw. Drehkranzgetriebe ausgeführt sein, welche in Bezug auf die jeweilige Drehachse (Vertikal- bez. Horizontalachse) zentrierte Öffnungen (zentrische Öffnungen) aufweisen, welche Öffnungen die Verlegung bzw. Durchführung der hydraulischen und elektrischen Leitungen sowie von Anschlüssen, Kupplungen, Anbindungsflanschen, Gegenflanschen und Kabeln erlauben. Die Kraftuntersetzung kann vorzugsweise durch einen Schneckenantrieb bewerkstelligt werden. Die Getriebe sind vorzugsweise mit Rotationsdichtungen ausgestattet und somit quasi wartungsfrei. Eine weitere Untersetzung mit Planetensätzen oder einem weiteren Schneckenantrieb kann in der Motoreinheit vorgesehen sein. Im Gegensatz zum üblichen Stand der Technik wird das erste Getriebe für die Drehung um die Azimutachse fix an der Nachführeinheit montiert, sodass dessen Abtrieb nach unten gerichtet ist. Ebenfalls neu zum Stand der Technik ist, dass für die Höhenverstellung (Sonnenhöhe) ein Drehkranzgetriebe zum Einsatz kommt. Gegenüber den allgemein zum Einsatz kommenden Spindeltrieben ist der Vorteil gegeben, dass keine Faltenbälge zur Abdichtung verwendet werden müssen, was den wartungsfreien Betrieb ermöglicht. Ein weiterer Vorteil ist, dass die Drehbewegung nicht mehr eingeschränkt ist, wogegen bei Spindeltrieben maximal Rotationen um etwa +/- 60° möglich sind. Die Motoreinheiten sind zudem von außen leicht zugänglich und zu warten. Dies hat Vorteile hinsichtlich der Betriebssicherheit der Solaranlage. Sollte ein Motor bzw. eine Motoreinheit defekt sein, so kann es passieren, dass die Solarkollektoren bzw. -zellen in einer (witterungs-) ungünstigen Position stehen bleiben. Nach Demontage der Motoreinheit kann das Getriebe über eine Handkurbel betätigt werden. Somit kann die Kollektoranlage von Hand in die Schutzposition gebracht werden. Bei Industrieanlagen mit einer Vielzahl an Kollektoreinheiten macht es Sinn, mindestens eine Motoreinheit auf Lager zu halten, um eine defekte Anlage umgehend wieder in Betrieb nehmen zu können.

Das freilaufende Lager des Schwenkbügels ist ein Loslager. Der Lagerbock ist am Traggestell befestigt bzw. Teil des Traggestells. Die Lagerwelle ist ein Einschubrohr, das am Schwenkbügel fixiert ist bzw. durch die zweite Durchgangsöffnung des Schwenkbügels hindurch in das Lager des Lagerbocks hineinragt. Eine transportfähige Fixierung des Schwenkbügels erfolgt vorzugsweise auf der Loslagerseite am Dichtring zwischen Schwenkbügel und Lagerbock und antriebsseitig am Abtriebsflansch des zweiten Getriebes. Eine kraftschlüssige Fixierung des Schwenkbügels erfolgt erst bei der Montage der beiden Tragarme. Für die Auslieferung genügt es aber, Passstifte mit einem leichten Presssitz vorzusehen und/oder eine zusätzliche Fixierung mit Senkschrauben vorzusehen. Mit den Passstiften können die Tragarme in der exakt achszentrierten Lage eingebaut werden. Weitere Details zur Ausführung und zum Zusammenbau sind der Figurenbeschreibung zu entnehmen.

Am Schnittpunkt der beiden Drehachsen kann die Verteilereinheit positioniert sein, umfassend ein T-förmiges Rohr-in-Rohr-System, das einen Ringspalt bildet, und weiters umfassend drei Drehblöcke. Dieses leitet Vor- und Rücklauf über die Drehblöcke (erster, zweiter, dritter Drehblock) zu den Kollektoren und von den Kollektoren zurück. Die Drehblöcke können über das Rohr-in-Rohr-System geschoben werden und (bezogen auf die Vertikal- und Horizontalachse) achsfluchtend über Anbindungs- bzw. Dichtflansche drehfest mit dem Steher und den beiden Tragarmen verbunden werden. Die Drehblöcke drehen sich mit dem Abtrieb des jeweiligen Getriebes mit (erster Drehblock mit dem ersten Getriebe, zweiter und dritter Drehblock mit dem zweiten Getriebe). Dies führt zu einer relativen Drehung der Drehblöcke zu den Leitungsabschnitten der Verteilereinheit bzw. zum Traggestell. Das T-förmige Rohr-in-Rohr-System kann schwimmend in oder an den Drehblöcken gelagert sein, sodass dieses Rohr-inRohr-System seine Position relativ zum Traggestell bzw. Gehäuse der Nachführeinheit nicht verändert. Die Drehblöcke sind an den Abdichtungen axial verschiebbar gehalten (schwimmend gelagert), sodass Wärmedehnungen, insbesondere spannungsfrei, aufgenommen werden können. Die Drehblöcke haben Anbindungsabschnitte (Anbindungsflansche, Flanschaufnahmen), welche Anbindungsabschnitte vorzugsweise nicht aus dem Gehäuseinneren herausragen, wodurch ein kollisionsfreier Aus- und Einbau der Verteilereinheit ermöglicht ist. Die korrenspondierenden Gegenflansche des Basiselements bzw. des Stehers sowie der beiden Tragarme sind über Isolierblöcke am jeweiligen Basiselement, insbesondere Steher, und/oder ersten Tragarm und/oder zweiten Tragarm bzw. an deren Leitungsaufnahmen oder -führungen fixiert, sodass der Wärmefluss von den heiß durchströmten Rohren über die Gegenflansche weitgehend unterbunden ist. Die Drehblöcke sind selbst wiederum wärmeisoliert und haben aufgrund der Isolierblöcke nur minimale Wärmebrücken über die Gegenflansche. Um schädigende Verspannungen zu vermeiden, ist ein exakt achsfluchtender Einbau der Verteilereinheit sowie Verbindung der Verteilereinheit und Nachführeinheit mit den übrigen Teilen der Solaranlage, insbeondere Basiselement und Tragarm(e), wichtig. Dies kann durch eine genaue bzw. achszentrierte Montage der Tragarme und des Basiselements mittels Passstiften an den Flanschaufnahmen der Nachführeinheit erfolgen.

Die Verteilereinheit kann beispielsweise zwei- oder dreiflutig ausgebildet sein. Entsprechend unterscheiden sich die Anbindungsabschnitte (Flanschaufnahmen) der Drehblöcke, die zur Abdichtung eingesetzten Dichtungen und die Gegenflansche der Tragarme und des Basiselements bzw. Stehers. Die Nachführeinheiten können mit weiteren Komponenten modular bestückt und/oder nachgerüstet werden, wobei die zusätzlichen Komponenten vorzugsweise vollständig im Gehäuseinneren aufgenommen sind. Dies bedeutet, dass in jeglicher Bestückung keine Kollisionen eintreten und die Anschlussmaße der Nachfüreinheit für unterschiedliche Einbauten bzw. Anschlussperipherien passen. Beide der nachfolgend näher beschriebenen Varianten werden in der Figurenbeschreibung noch genauer behandelt.

Variante A - zweiflutige Anbindung: Die Hauptanwendung für zweiflutige Anbindungen liegt bei der solaren Erzeugung von Sattdampf. Die Drehblöcke haben einen Vor- und einen Rücklaufanschluss. Das innere T-förmige Verzweigerrohr wird kollektorauswärts (heizungstechnisch Rücklauf) durchströmt, während der Ringspalt zwischen innerem und äußerem Rohr kollektoreinwärts (heizungstechnisch Vorlauf) durchströmt wird. Betrachtet man Kollektoren mit Direktverdampfung, so ist die Kondensatmenge, die zu den Kollektoren gebracht wird, sehr gering. Dies erklärt sich aus der extrem hohen Verdampfungsenergie im unteren Naßdampfbereich. Der Haupteinsatz der Verteilereinheit wird sich auf solche Systeme mit Direktverdampfung richten. Die Kondensatleitung hat somit einen geringen Durchflussquerschnitt. Die Auswirkung der Wärmebrücke zwischen Kondensat und Sattdampf ist vernachlässigbar. Es gibt in jedem der Drehblöcke eine Haupt- und eine Nebendichtung. Die Hauptdichtung kann aus einer hitzebeständigen Führungshülse (z.B. aus Teflon gefertigt) und einer eingelegten Weichdichtung (z.B. aus Viton, Polyetheretherketon (PEEK) oder Peak) bestehen, die zwischen Drehblock und dem äußeren Rohr des T-Stückes angeordnet ist. Abzudichten ist der Systemdruck gegen den Außendruck. Die Nebendichtung dichtet das innere Rohr gegen den Ringspalt ab und liegt somit beidseitig im Systemdruck. Somit ist ausschließlich der Druckverlust von und zu den Kollektoren dichtrelevant. Auch hier empfiehlt sich eine Hülse aus Teflon, Polyetheretherketon (PEEK) oder Peak zwischen dem inneren Rohr des T-Stückes und dem Drehblock vorzusehen. Die Verteilereinheit kann ohne besonderen Aufwand auf Systemdrücke bis zu 50 bar und, je nach Werkstoffauswahl, auf eine Dampfdrucktemperatur von bis zu 260°C ausgelegt werden.

Variante B - Dreiflutige Anbindung: Dreiflutige Anbindungen werden dann vorgesehen, wenn hohe Volumenströme, wie zum Beispiel bei der Dampfüberhitzung, vorliegen. Die Drehblöcke haben einen Vorlaufanschluss und zwei Rücklaufanschlüsse. Das innere T-förmige Verzweigerrohr wird kollektoreinwärts (heizungstechnisch Vorlauf) durchströmt, während der Ringspalt zwischen innerem und äußerem Rohr kollektorauswärts (heizungstechnisch Rücklauf) durchströmt wird. Die Durchströmung ist im Vergleich zu Variante 1 verkehrt. Der dichtungstechnische Aufbau ist derselbe wie bei der zweiflutigen Verteilereinheit, nur mit anderer Dimensionierung der Querschnitte. Auch hier können Systemdrücke bis zu 50 bar betrieben werden. Die Überhitzung des Dampfes auf hohe Temperaturen über 400°C ist kein Problem, da die Hauptdichtung in der Temperatur des Sattdampfes (Rücklauf) bei maximal 260°C liegt. Die Nebendichtung hingegen liegt im hohen Temperaturbereich. Hierfür empfiehlt es sich eine metallische oder keramische Dichtung vorzusehen. Im einfachsten Fall genügt ein passgenauer Sitz ohne eine Dichthülse. Eine geringe Leckage kann hingenommen werden, da die Volumenausdehnung des Dampfes sehr hoch ist, was zu einer vernachlässigbaren Massenstromleckage aufgrund eines Strömungskurzschlusses führt. Nachdem die Temperaturdifferenz von Vorlauf zu Rücklauf relativ hoch sein kann, empfiehlt es sich, das innere Rohr doppelwandig (beispielsweise mit Vakuumringspalt) zu gestalten, sodass eine Temperaturanhebung in den Kollektoren aufgrund von Wärmebrücken vermieden wird.

Die Haupanwendung für die Erzeugung von erhitztem Dampf ist die Stromgewinnung. Überhitzten Dampf in zwei getrennten Stufen, Verdampfung und Überhitzung, zu erzeugen, hat den Vorteil, dass die Wärme leichter in die Station zur Verstromung gebracht werden kann. Je nach Prozessdruck (15-50 bar) beträgt der Wärmeanteil für die Überhitzung 10% bis 20%. Somit ist bei größeren Anlagen jeder zehnte bis fünfte Kollektorbaum für die Dampfüberhitzung ausgelegt. Der Vorteil der Aufgabentrennung liegt in der Einbringung der Wärme. So können die Hochtemperaturkollektoren bei geringen Leitungslängen möglichst nahe zur Station aufgestellt werden. Hohe Prozesstemperaturen sind sinnvoll, da die Leistung peripherer Anbindungsgeräte für die Verstromung oder zur Erzeugung von Kälte mit der Temperatur steigt. Bei der Erzeugung von Sattdampf nehmen die Wärmeverluste in den Leitungen mit hohen Prozesstemperaturen nicht zwingend zu, da bei erhöhten Temperaturen auch erhöhte Systemdrücke vorherrschen. Mit zunehmendem Druck nimmt das spezifische Volumen des Dampfes ab, was wiederum erlaubt, die Leitungsquerschnitte kleiner zu dimensionieren. Somit werden die wärmeabgebenden Flächen verringert. Kleine Leitungsquerschnitte verringern auch die Wärmekapazität der Anlage, was den Energieaufwand für die Aufheizung der Anlage verringert. Wichtig sind eine lückenlose Isolierung und die Vermeidung von Wärmebrücken. Die Drehblöcke können zylinderförmig ummantelt sein. Der Zwischenraum kann mit Isoliermaterial ausgefüllt sein. Die topfförmige Ummantelung kann stirnseitig an den Drehblöcken montiert sein. Diese Montage kann zugleich die Hauptdichtungen (Führungshülsen) der Drehblöcke fixieren, die ansonsten vom Systemdruck ausgeschoben würden. Die Schubkraft kann je nach Systemdruck bis zu 75 kg betragen. Weitere Details hierzu sind in den Figuren gezeigt in der Figurenbeschreibung behandelt.

Eine intervallweise bzw. regelmäßige Reinigung der Kollektoren ist wichtig, um die Leistung hoch zu halten und die Spiegel zu schonen. Bei Industrieanlagen ist eine automatische Reinigungseinrichtung sinnvoll, da die Kosten für die Arbeit zur regelmäßigen Reinigung im Laufe der Jahre relativ hoch werden können. Optional ist nun für die automatische Reinigung eine Einrichtung zur Verzweigung des Reinigungswassers, das über die zwei Drehachsen (Vertikal- und Horizontalachse) geleitet wird, vorgesehen. Dies ist eine modulare Bestückung nach Kundenwunsch; die Reinigungseinrichtung kann auch nachgerüstet werden. Modular bedeutet hier, dass sämtliche Komponenten in unterschiedlicher Konfiguration kollisionsfrei und funktionstüchtig eingebaut werden können - dies auch nachträglich im Sinne einer Nachrüstung.

Je nachdem, ob eine eingeschränkte oder eine beliebige Drehung um die Azimutachse (Vertikalachse) gewünscht bzw. erforderlich ist, gibt es zwei Varianten für die Durchleitung des Reinigungswassers über die Azimutachse:

Reinigungsvariante A - eingeschränkte Bewegung: Bei der Montage an den Steher ragt der Leitungsstutzen des Stehers für die Reinigung in das Gehäuseinnere bzw. den Raum zwischen einer Grundplatte des Traggestells und dem ersten Drehblock. Es gibt genug Platz für die Montage eines Schlauchanschlusses an diesem Leitungsstutzen. Um die Biegebewegungen des Schlauches möglichst moderat zu halten, empfiehlt es sich, verdrehbare Anschüsse vorzusehen. Diese nehmen wenig Platz ein. Die Drehanschlüsse für solche Leitungsstutzen bzw. Reinigungseinrichtungen können exzentrisch zur Drehachse des jeweiligen Getriebes - hier exzentrisch zur Vertikalachse - liegen. Die an derartigen Drehanschlüssen angebundenen Schläuche müssen sich bei der im Zuge der Nachführung auftretenden Drehung nach wie vor biegen, können dies aber in einem weit größeren Radius tun. Ein Vorteil dieses Systems ist auch, dass bei der Wartung bzw. Demontage aufgrund einer Leckage der Reinigungseinrichtung das hydraulische System der Solaranlage nicht geöffnet werden muss. Der Betrieb kann weitergehen.

Reinigungsvariante B - beliebige Umdrehung: Wird das System auf eine beliebige Verdrehmöglichkeit um die Azimutachse (Vertikalachse) ausgelegt, so kann für das Reinigungswasser eine Drehdurchführung vorgesehen sein. Einbauraum ist beispielsweise oberhalb des ersten Drehblocks (Vertikaldrehblockes) gegeben. Diese Drehdurchführung kann abströmseitig einen Stutzen für einen Schlauchanschluss und zuströmseitig einen Leitungsstutzen aufweisen, vorzugsweise mit einer Flanschanbindung, der zwischen Drehblock und Ummantelungsbuchse eingeschoben wird. Weitere Details zum Einbau und der Ausführung werden in der Figurenbeschreibung gezeigt.

Elektrik: Erfindungsgemäß kann eine Steuereinheit im Gehäuseinneren der Nachführeinheit verbaut sein. Die Sensorik für die Erkennung der Winkelstellung des ersten und/oder zweiten Tragarms und/oder des Basiselements kann ebenfalls im Gehäuseinneren der Nachführeinheit untergebracht sein. Über die Winkelmessung können auch die Endlagen definiert werde, sodass keine separaten Endschalter erforderlich sindc. Die Winkelabnahme kann an den Drehblöcken erfolgen, welche Drehblöcke sich relativ zum Getriebegehäuse bewegen. Da die Steuereinheit im geschützten Innenraum untergebracht sein kann, können die Kabel von der Steuereinheit zu den zwei Motoreinheiten bzw. Motoren der Nachführeinheit auf kürzestem Wege und starr verlegt werden. Die Motoreinheiten bzw. Motoren benötigen von der Steuereinheit nur noch die Signale zum Betrieb (z.B. Plus und Minus). Eine Verkabelung eines Windsensors, der an der Nachführeinheit, insbesondere am Gehäuse der Nachführeinheit, befestigt sein kann, kann ebenfalls starr erfolgen, da sich dieser mit dem Traggestell der Nachführeinheit und somit mit der Steuereinheit mitdreht - in anderen Worten: Eine Befestigung des Windsensors keine Relativbewegung zum Gehäuse der Nachführeinheit ausführt. Der Sensor für die Feinkalibrierung der Nachführung an den Sonnenstand dreht sich in der Horizontalachse relativ zum Gehäuseinneren. Für dessen Anbindung an die Steuereinheit ist ein flexibles Kabel vorzusehen. Die elektrischen Leitungen für die Motoreinheiten bzw. Motoren, die mit den Antrieben der Getriebe wirkverbunden bzw. verbindbar sind, den Windsensor und/oder den Sensor für die Feinkalibrierung der Nachführung werden insbesondere abdichtend in das Gehäuseinnere eingeführt. Auf die Ummantelungsbuchse des ersten Drehblocks (Vertikalblockes) kann eine rohrförmige Abdeckung, hier als Drehgehäuse bezeichnet, aufgeschoben sein, welches Drehgehäuse einen Ringspaltraum bildet. Das Drehgehäuse kann dabei zweiteilig ausgeführt sein, sodass eine Demontage für Wartungsarbeiten ohne Öffnen des Hydraulikkreises möglich ist. Das Drehgehäuse kann fix (drehfest) mit dem Traggestell verbunden sein und von der Ummantelungsbuchse zentriert werden. Mit der Fixierung des Drehgehäuses kann zugleich ein außenseitiger Isolierblock bzw. eine Verteilerbox mit Steckkontakten befestigt werden. Hier kann die Steuereinheit angesteckt werden. Die Überführung der Elektrik um die Drehachse kann im Ringspalt im Inneren des Drehgehäuses mittels Schleifringen oder flexibler Kabelstränge stattfinden. Je nachdem, ob nun Schleifringe oder flexible Kabelstränge vorgesehen sind, hat der außenseitige Isolierblock bzw. die Verteilerbox eine federschlüssige Schleifringabnahme oder tangential ausgehende Kabelstränge. Die Kabelstränge können sich bei Rotationsbewegungen nach dem Clockspring-Prinzip, so wie das auch bei Lenkungen im Automotive Sektor üblich ist, im Ringspalt geometrisch entlang genau festgelegter Bahnen auf- und abwickeln. Die elektrischen Leitungen können je nach Ausführung über eine Ausnehmung in der Ummantelung zu einem innenliegenden Isolierblock bzw. Verteilerbox mit Schleifringen oder tangential ausgehenden Kabelsträngen verbunden werden. Weitere Details zum Einbau der Elektrik sind in der Figurenbeschreibung angeführt. Die Elektrik kann über einen Mehrfachstecker an den Kabelstrang aus dem Steher angebunden sein. Gekühlte Photovoltaik (PV), insbesondere für Konzentratorsysteme, spielt eine immer größer werdende Rolle im Zusammenhang mit erneuerbaren Energien. Im Drehgehäuse kann ein Aufnahmebereich freigehalten sein, um die zusätzliche Elektrik für den PV-Strom zu installieren. Auch hier kommen flexible Leitungsbänder oder Schleifringe zum Einsatz. Weitere Details hierzu finden sich in der Figurenbeschreibung.

### Kurzbeschreibung der Figuren

Im Folgenden werden bevorzugte Ausführungsvarianten der Erfindung anhand der Zeichnungen näher dargestellt. Diese Ausführungsvarianten sollen den Erfindungsgedanken näher beschreiben, ihn aber keinesfalls eingrenzen oder gar abschließend darstellen. Es zeigen:
Fig. 1 eine schematische Ansicht einer ersten Ausführungsvariante der erfindungsgemäßen Nachführeinheit in einer Explosionsdarstellung,
Fig. 2 eine schematische Darstellung einer ersten Ausführungsvariante der erfindungsgemäßen Verteilereinheit mit einer Detailansicht des zweiten Drehblocks in einer Schnittdarstellung,
Fig. 3 eine schematische Darstellung einer zweiten Ausführungsvariante der erfindungsgemäßen Verteilereinheit mit einer Detailansicht des zweiten Drehblocks in einer Schnittdarstellung,
Fig. 4 die erste Ausführungsvariante der erfindungsgemäßen Verteilereinheit mit hergestellten fluidischen Anschlüssen,
Fig. 5 die zweite Ausführungsvariante der erfindungsgemäßen Verteilereinheit mit hergestellten fluidischen Anschlüssen,
Fig. 6 ein Detail aus Fig. 4,
Fig. 7 ein Detail aus Fig. 5 mit einer Detailansicht des Gegenflansches des Stehers,
Fig. 8 eine schematische Darstellung einer ersten Ausführungsvariante der Reinigungseinrichtung,
Fig. 9 eine schematische Darstellung einer zweiten Ausführungsvariante der Reinigungseinrichtung,
Fig. 10A eine schematische Darstellung einer ersten Ausführungsvariante des Drehgehäuses,
Fig. 10B eine schematische Darstellung der ersten Ausführungsvariante des Drehgehäuses aus einer zweiten Perspektive,
Fig. 11 eine schematische Darstellung einer zweiten Ausführungsvariante des Drehgehäuses,
Fig. 12 eine schematische Ansicht einer zweiten Ausführungsvariante der erfindungsgemäßen Nachführeinheit, und
Fig. 13 eine schematische Ansicht einer dritten Ausführungsvariante der erfindungsgemäßen Nachführeinheit.

### Wege zur Ausführung der Erfindung

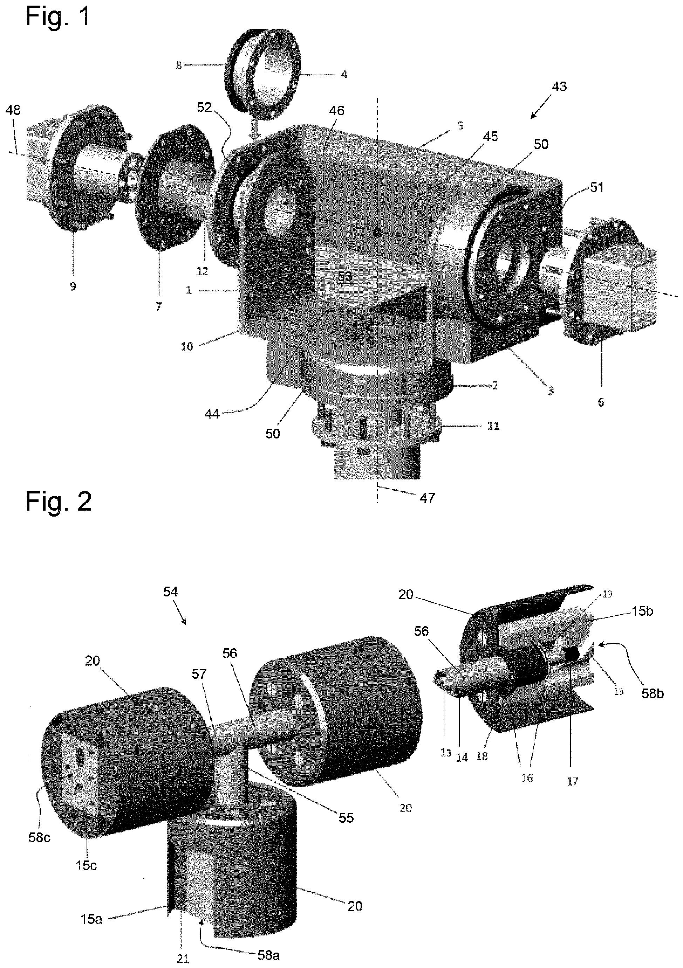

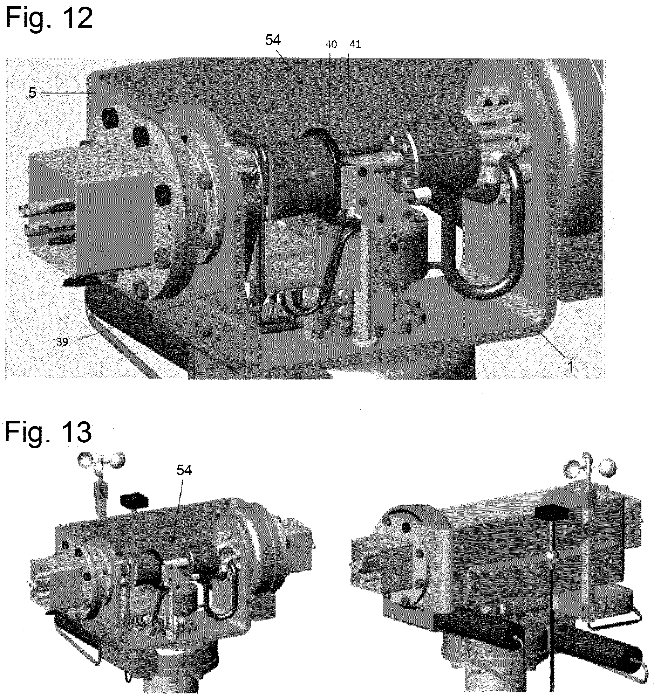

Fig. 1 zeigt eine schematische Ansicht einer ersten Ausführungsvariante der erfindungsgemäßen Nachführeinheit 43 in einer Explosionsdarstellung. Dabei zeichnet sich die Nachführeinheit 43 dadurch aus, dass ein Traggestell 1 mit drei Flanschaufnahmen vorgesehen ist, welche Flanschaufnahmen jeweils um eine erste Durchführungsöffnung 44, eine zweite Durchführungsöffnung 45 und um eine dritte Durchführungsöffnung 46 herum angeordnet sind. Die erste Flanschaufnahme im Bereich der ersten Durchführungsöffnung 44 dient der Aufnahme eines ersten Getriebes 2 zur Drehung um eine Vertikalachse 47; die zweite Flanschaufnahme im Bereich der zweiten Durchführungsöffnung 45 dient der Aufnahme eines zweiten Getriebes 3 zur Drehung um eine Horizontalachse 48; und die dritte Flanschaufnahme im Bereich der dritten Durchführungsöffnung 46 dient der Aufnahme eines Lagerbocks 4, welcher Lagerbock 4 fluchtend bzw. achszentriert zur Horizontalachse 48 angeordnet ist. Die drei Durchführungsöffnungen 44, 45, 46 sind zur Durchführung der Leitungen und Kabel vorgesehen. Die Getriebe 2, 3 sind abtriebsseitig nach außen gerichtet, d.h. ihre jeweiligen Abtriebe sind von außen zugänglich. Getriebekörper bzw. Getriebegehäuse 50 und Motoreinheiten 49 (siehe Fig. 13) sind starr mit dem Traggestell 1 verbunden. Für die Aufnahme eines ersten Tragarms 6 (und gegebenenfalls eines zweiten Tragarms 9) ist ein massiver Schwenkbügel 5 mit zwei Flanschaufnahmen vorgesehen. Das Festlager befindet sich am Abtriebsflansch des zweiten Getriebes 3 und das Loslager am Lagerbock 4. Die beiden Flanschaufnahmen des Schwenkbügels 5 umgeben je eine Durchgangsöffnung, nämlich eine erste Durchgangsöffnung 51 und eine zweite Durchgangsöffnung 52, für die Verlegung bzw. Durchführung hydraulischer und gegebenenfalls elektrischer Leitungen. Die um die erste Durchgangsöffnung 51 herum angeordnete Flanschaufnahme des Schwenkbügels 5 ist im Betriebszustand (sandwichmäßig) zwischen einem Flansch des Abtriebs des zweiten Getriebes 3 und einem Flansch des ersten Tragarmes 6 eingebettet. Die Fixierung des Schwenkbügels 5 am Loslager erfolgt durch einem Zwischenflansch 7 mit einer Hohlwelle. Die Hohlwelle bildet das drehbare Innenlager zum Lagerbock 4. Für den Transport genügt es, den Schwenkbügel 5 mit Paßstiften 12 zu fixieren. Der Schwenkbügel 5 wird von einer Rotationsdichtung 8 zum Lagerbock 4 gehalten. Eine kraftschlüssige Fixierung erfolgt erst mit der Montage der Tragarme 6, 9. Die Tragarme 6, 9 und ein als Steher 11 ausgebildetes Basiselement der Solaranlge werden über die Paßstifte 12 exakt in Bezug auf die Vertikal- bzw. Horizontalachse zentriert. Über das Traggestell 1 wird eine Abdeckung (nicht dargestellt) montiert, sodass technische Komponenten (z.B. Verteilereinheit, Drehdurchführung, Elektrik, Schleifringe, flexible Kabel, Schläuche, Steuereinheit) in einem geschlossenen und abgedichteten Raum, nämlich einem Gehäuseinneren 53 aufgenommen sein können.

Fig. 2 zeigt eine Verteilereinheit 54 für eine zweiflutige Anbindung. Die Verteilereinheit 54 umfasst einen ersten Leitungsabschnitt 55 mit einem ersten Drehblock 15a, einen zweiten Leitungsabschnitt 56 mit einem zweiten Drehblock 15b und einen dritten Leitungsabschnitt 57 mit einem dritten Drehblock 15c. In der Schnittansicht ist der innere Aufbau der am Schnittpunkt fluidisch miteinander verbundenen Leitungsabschnitte 55, 56, 57 zu erkennen, nämlich ein Rohr-in-Rohr-System, mit einem inneren Rohr 13 und einem äußeren Rohr 14. Das Außenrohr 14 des jeweiligen Leitungsabschnitts, hier des zweiten Leitungsabschnitts 56, ist jeweils an einer Hauptdichtung 16 schwimmend über den jeweiligen Drehblock, hier in dem zweiten Drehblock 15b, gelagert. Das Innenrohr 13 des jeweiligen Leitungsabschnitts, hier des zweiten Leitungsabschnitts 56, ist jeweils an einer Nebendichtung 17 ebenfalls schwimmend über den jeweiligen Drehblock, hier in dem zweiten Drehblock 15b, gelagert. Die Hauptdichtung 16 kann, wie hier gezeigt, aus einer (Führungs-) Hülse 18 und einem O-Ring 19 aufgebaut sein. Eine Ummantelungsbuchse 20 des zweiten Drehblocks 15b ist stirnseitig mit dem Drehblock 15b verschraubt und drückt gegen die Ausschubkraft der Führungshülse 18. Zu sehen ist außerdem eine Wärmeisolation 21 des ersten Drehblocks 15a, welche Wärmeisolation jedoch in mehreren oder sämtlichen Drehblöcken 15a, 15b, 15c vorgesehen sein kann, um eine Wärmeisolierung des jeweiligen Leitungsabschnitts 55, 56, 57 zu erreichen.

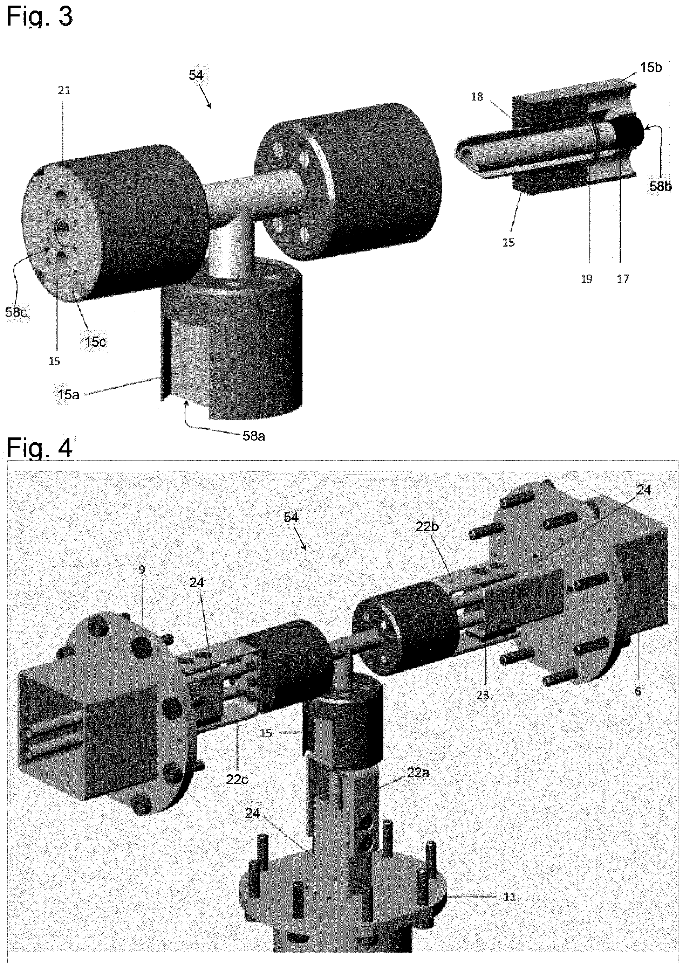

Fig. 3 zeigt eine Verteilereinheit 54 für eine dreiflutige Anbindung. Der prinzipielle Aufbau ist derselbe wie bei der zweiflutigen Verteilereinheit 54 (Fig. 2), jedoch gegebenenfalls mit anderer Dimensionierung der Querschnitte. Die Drehblöcke 15a, 15b, 15c sind dabei so dimensioniert bzw. ausgebildet, dass die im Innenrohr 13 und im Außenrohr 14 geführten Ströme auf drei Teilströme aufgeteilt werden, welche Teilströme den im jeweiligen Anbindungsabschnitt mündenden Ein- und Auslässen entsprechen (zu sehen in der Stirnfläche des dritten Drehblocks 15c in Fig. 3). Fig. 4 zeigt die zweiflutige Verteilereinheit 54 im Verbau bzw. mit hergestellten fluidischen Verbindungen mit externen (thermischen) Leitungen des Stehers 11, des ersten Tragarms 6 und des zweiten Tragarms 9. Die Verteilereinheit 54 ist an den Anbindungsabschnitten 58a, 58b, 58c (Flanschaufnahmen) der Drehblöcke 15a, 15b, 15c zentrisch gelagert. Zweiflutige Gegenflansche 22a, 22b, 22c sind gabelförmig ausgeführt und über Isolierbacken 23 an Vierkantrohren 24 befestigt, die fix mit den Tragarmen 6, 9 und dem Steher 11 verbunden oder einstückig mit diesen ausgebildet sind. Die thermischen Leitungen der Tragarme 6, 9 und des Stehers 11 sind mit dem jeweiligen Gegenflansch 22 verschweißt oder abdichtend verbunden.

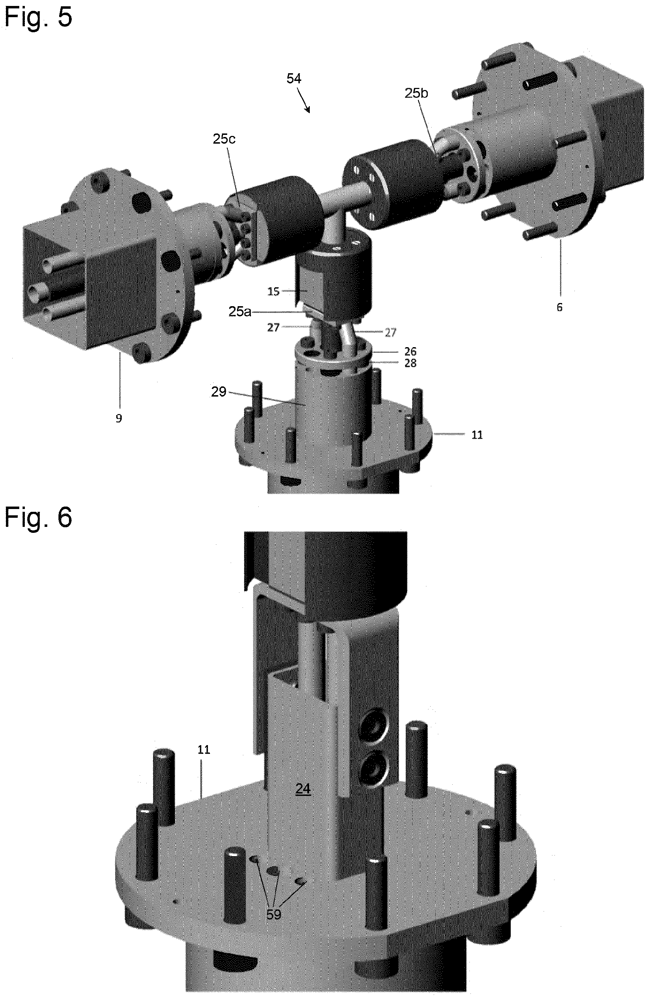

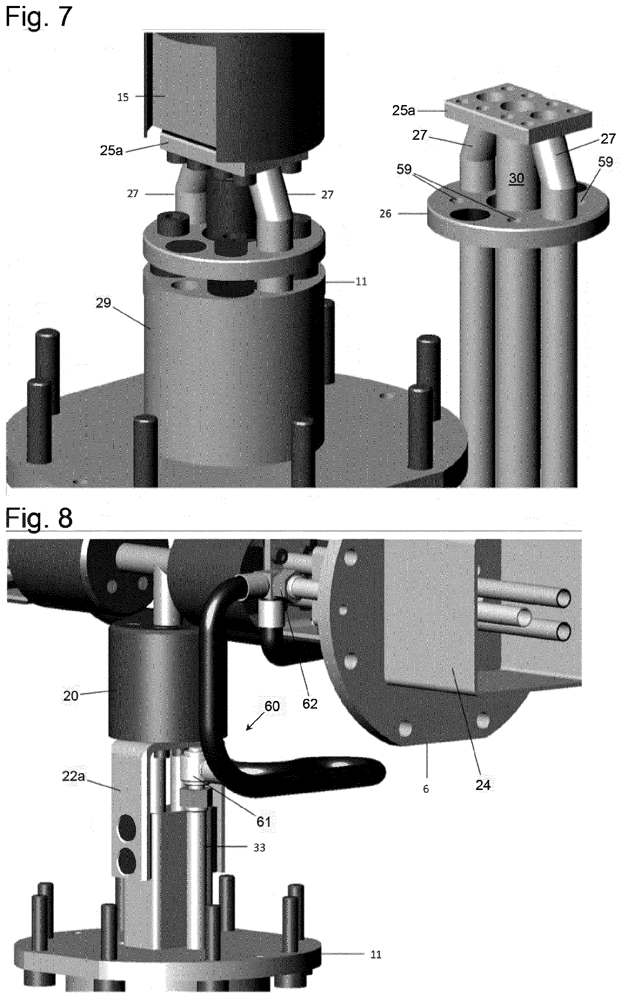

Fig. 5 zeigt die dreiflutige Verteilereinheit 54 im Verbau bzw. mit hergestellten fluidischen Verbindungen mit externen (thermischen) Leitungen des Stehers 11, des ersten Tragarms 6 und des zweiten Tragarms 9. Dreiflutige Gegenflansche 25a, 25b, 25c zu den Drehblöcken 15a, 15b, 15c wird jeweils über einen Zwischenflansch 26 gehalten. Der Gegenflansch 25a, 25b, 25c wird von den äußeren Rohren 27, die fix mit dem jeweiligen Gegenflansch 25a, 25b, 25c verschweißt sind, getragen. Der Zwischenflansch 26 ist jeweils über Isolierhülsen 28 an einem fix mit dem Steher 11 oder den Tragarmen 6, 9 verschweißten Rundrohr 29 mit stirnseitigem Flansch verschraubt. Der Zwischenflansch 26 und ein Stirnflansch des Rundrohrs 29 haben jeweils mittig eine entsprechend große Durchgangsöffnung, sodass zum heißen inneren Rohr 30 (siehe Fig. 7) mit überhitztem Dampf ein Ringspalt gegeben ist. Fig. 6 zeigt Details zu den Aufnahmen der zweiflutigen Verteilereinheit. Führungen 59 für elektrische Leitungen (z.B. PV, Betriebsstrom für die Steuereinheit, Signalleitung) sind am Flansch des Stehers 11 neben dem Vierkantrohr 24 vorgesehen.

Fig. 7 zeigt Details zu den Aufnahmen der dreiflutigen Verteilereinheit 54 (hier: am Steher 11). Am jeweiligen Gegenflansch (hier erster Gegenflansch 25a) sind die beiden äußeren externen Leitungen bzw. Rohre 27 und die externe innere Leitung bzw. Rohr 30 verschweißt. Die äußeren Rohre 27 sind jeweils auch am Zwischenflansch 26 verschweißt und tragen diesen. Alle anderen Durchgänge bzw. Führungen 59 am Zwischenflansch 26 (z.B. für Heißdampfleitung 30, Elektrik, Leitung für Reinigung) haben einen Ringspalt. Der Stirnflansch des Rundrohrs 29 des Stehers 11 hat ebenfalls entsprechende berührungslose Durchgangsöffnungen für die drei externen Leitungen 27 und 30 (1 x Vor- und 2 x Rücklauf) und gegebenenfalls für weitere Kabel und Leitungen. Die Tragarme 6, 9 sind in dieser Hinsicht analog aufgebaut.

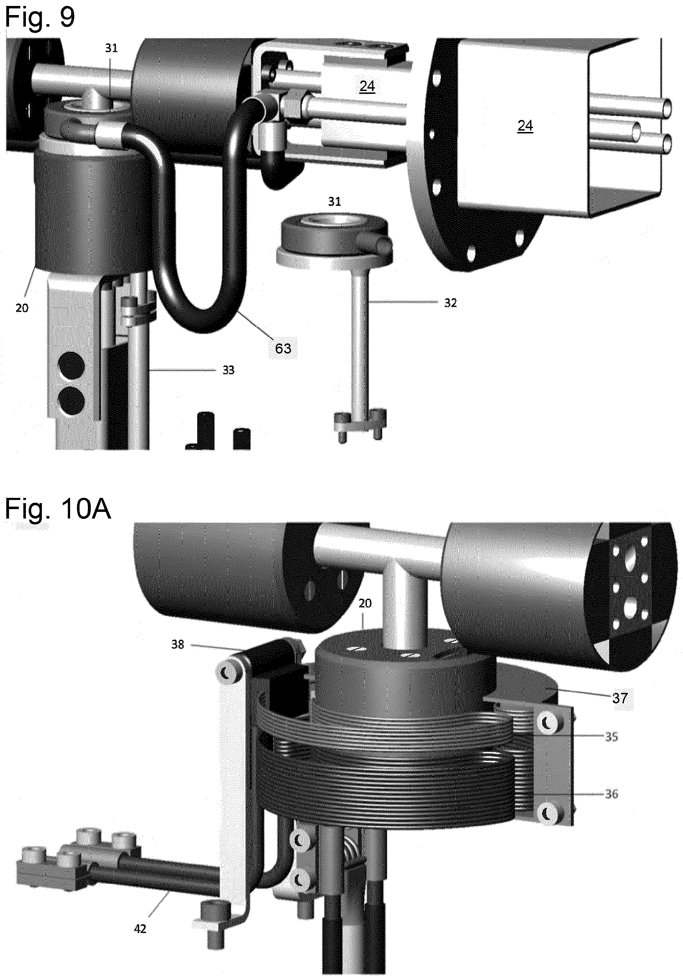

Fig. 8 zeigt die Reinigungseinrichtung 60 nach Variante A. An einem Leitungsstutzen 33, der vom Steher 11 kommend in das Gehäuseinnere 53 hineinragt, ist mittels einer Überwurfmutter eine verdrehbare Schlauchverbindung 61 mit Verzweigung 62 zu den Tragarmen 6 und 9 (nicht im Bild) befestigt. Fig. 9 zeigt die Reinigungseinrichtung nach Variante B. Dabei ist über der Ummantelungsbuchse 20 des ersten Drehblocks 15a (Vertikaldrehblocks) eine Drehdurchführung 31 angeordnet. Der Leitungsstutzen 32 der Drehdurchführung 31 wird im Raum zwischen Drehblock 15a (im Bild durch die Ummantelungsbuchse 20 verdeckt) und Ummantelung 20 durchgeführt und über eine Flanschverbindung abdichtend mit dem Leitungsstutzen 33, welcher Leitungsstutzen 33 vom Steher 11 kommend in das Gehäuseinnere 53 hineinragt, verschraubt. Der Schlauch 63 kann in diesem Fall starr ausgeführt sein.

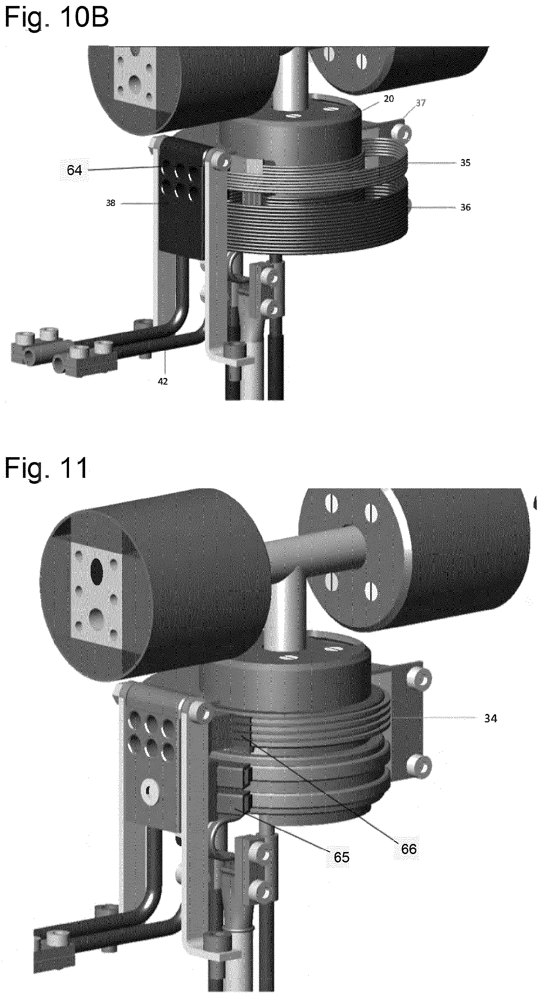

Fig. 10A zeigt die elektrische Anbindung nach Variante A in einer ersten Ansicht. Im Ringspalt eines Drehgehäuses 37, das über die Ummantelungsbuchse 20 zentriert bzw. um die Ummantelungsbuchse 20 herum angeordnet ist, sind spiegelsymmetrisch nach beiden Richtungen Kabelstränge 35, 36 verlegt, die eine abrollende Drehbewegung mitmachen. Der erste Kabelstrang 35 versorgt eine Verteilerbox 38 mit Steckkontakten 64. Der zweite Kabelstrang 36 dient einer PV-Anbindung mit zwei Polen. Die Ableitung von PV-Leitungen 42 erfolgt hinter der Verteilerbox 38 - also zwischen Verteilerbox 38 und Drehgehäuse 37. Das Drehgehäuse 37 ist hier zweiteilig ausgeführt. Die vordere Seite ist abnehmbar und in dieser Ansicht (Fig. 10A) ausgeblendet. Die Verteilerbox 38 wird an oder zwischen den beiden Hälften des Drehgehäuses 37 fixiert. Fig. 10B zeigt eine andere Perspektive dieser elektrischen Anbindung nach Variante A; insbeonsdere sind hier zusätzlich auch die Steckkontakte 64 der Verteilerbox 38 erkennbar.

Fig. 11 zeigt die elektrische Anbindung nach Variante B. Anstatt der Kabelstränge 35 und 36 werden hier Schleifringe 34 und Schleifkontakte 65 eingesetzt. Fig. 12 zeigt eine komplett bestückte Nachführeinheit mit zweiflutiger Verteilereinheit 54, wobei im Gegensatz zu den Fig. 2 bis 11 hier auch das Traggestell 1, der Schwenkbügel 5 und der Lagerbock 4 der Nachführeinheit 43 zu sehen sind. Nicht dargestellt ist die Abdeckung. Neu zu sehen sind eine Steuereinheit 39, winkelkodierte Ringe 40 und Winkelsensoren 41, hier nur schematisch gezeigt.

Fig. 13 zeigt eine komplett bestückte Nachführeinheit 43 (ohne Abdeckung) mit dreiflutiger Verteilereinheit 54 in zwei Ansichten. Der zweite Kabelstrang 36 für PV fällt hier weg, da hier ausschließlich die Dampfüberhitzung angestrebt wird. Zu sehen sind außerdem weitere Sensoren, insbesondere ein Windsensor, welche Sensoren an der Nachführeinheit 43 bzw. deren Gehäuse befestigt sind.

## Patentansprüche

1. Nachführeinheit (43) für eine Solaranlage, die Nachführeinheit (43) umfassend zumindest
a. ein Gehäuse mit einem Gehäuseinneren (53), welches Gehäuse zumindest zur bestimmungsgemäßen Aufnahme einer Verteilereinheit (54), welche Verteilereinheit (54) zumindest einen ersten Leitungsabschnitt (55) mit einem ersten Drehblock (15a), welcher erste Drehblock (15a) zur Herstellung einer fluidischen Verbindung zwischen erstem Leitungsabschnitt (55) und einem Basiselement, insbesondere Steher (11), eingerichtet ist, sowie einen zweiten Leitungsabschnitt (56) mit einem zweiten Drehblock (15b) umfasst, welcher zweite Drehblock (15b) zur Herstellung einer fluidischen Verbindung zwischen zweitem Leitungsabschnitt (56) und einem ersten Tragarm (6) der Solaranlage eingerichtet ist, wobei der erste Leitungsabschnitt (55) drehbar mit dem ersten Drehblock (15a) verbunden ist und wobei der zweite Leitungsabschnitt (56) drehbar mit dem zweiten Drehblock (15b) verbunden ist, und vorzugsweise auch zur Aufnahme weiterer Komponenten wie Drehdurchführungen, Elektrik, Schleifringe, Kabel, Schläuche und/oder Steuereinheit, im Gehäuseinneren (53) eingerichtet ist und durch zumindest ein Traggestell (1) und eine lösbar mit dem Traggestell (1) verbundene Abdeckung (10) ausgebildet ist, sowie
b. zumindest ein erstes Getriebe (2) zur Drehung um eine Vertikalachse (47) und ein zweites Getriebe (3) zur Drehung um eine Horizontalachse (48), wobei das erste Getriebe (2) und das zweite Getriebe (3) vorzugsweise jeweils als Drehkranzgetriebe ausgebildet ist,
c. wobei im Gehäuseinneren (53) die Verteilereinheit (54), vorzugsweise in Bezug auf die Vertikalachse (47) und die Horizontalachse (48) achszentriert, angeordnet ist,
d. wobei ein Getriebegehäuse des ersten Getriebes (2) drehstarr mit dem Traggestell (1) verbunden ist und ein Abtrieb des ersten Getriebes (2) von außen zugänglich ist, um mit einem Basiselement, insbesondere Steher (11), verbunden zu werden, und
e. wobei ein Getriebegehäuse des zweiten Getriebes (3) drehstarr mit dem Traggestell (1) verbunden ist und ein Abtrieb des zweiten Getriebes (3) von außen zugänglich ist, um mit einem ersten Tragarm (6) der Solaranlage verbunden zu werden.

2. Nachführeinheit (43) nach Anspruch 1, **dadurch gekennzeichnet, dass** die Verteilereinheit (54) einen dritten Leitungsabschnitt (57) mit einem dritten Drehblock (15c) aufweist, welcher dritte Drehblock (15c) zur Herstellung einer fluidischen Verbindung zwischen drittem Leitungsabschnitt (57) und einem zweiten Tragarm (9) der Solaranlage eingerichtet ist, wobei der dritte Leitungsabschnitt (57) drehbar mit dem dritten Drehblock (15c) verbunden ist.

3. Nachführeinheit (43) nach einem der Ansprüche 1 oder 2, **dadurch gekennzeichnet, dass** der erste Leitungsabschnitt (55) schwimmend in dem ersten Drehblock (15a) und/oder der zweite Leitungsabschnitt (56) schwimmend in dem zweiten Drehblock (15b) und/oder, sofern abhängig von Anspruch 2, der dritte Leitungsabschnitt (57) schwimmend in dem dritten Drehblock (15c) gelagert ist.

4. Nachführeinheit (43) nach einem der Ansprüche 2 oder 3, **dadurch gekennzeichnet, dass** die Verteilereinheit (54) als T-Stück ausgebildet ist, dessen Stamm den ersten Leitungsabschnitt (55) und dessen Arme den zweiten Leitungsabschnitt (56) und den dritten Leitungsabschnitt (57) der Verteilereinheit (54) ausbilden.

5. Nachführeinheit (43) nach einem der Ansprüche 1 bis 4, **dadurch gekennzeichnet, dass** zumindest ein Leitungsabschnitt (55, 56,57), vorzugsweise sämtliche Leitungsabschnitte (55, 56,57), der Verteilereinheit (54) durch ein Rohr-in-Rohr-System mit einem inneren Rohr (13) und einem äußeren Rohr (14) ausgebildet ist, wobei zwischen innerem Rohr (13) und äußerem Rohr (14) ein Ringspalt ausgebildet ist, um einen Vorlauf und einen Rücklauf eines Heizkreises zu führen.

6. Nachführeinheit (43) nach einem der Ansprüche 1 bis 5, **dadurch gekennzeichnet, dass** der erste Drehblock (15a) Mittel zur Herstellung einer starren Verbindung mit dem Basiselement, insbesondere dem Steher (11), und/oder der zweite Drehblock (15b) Mittel zur Herstellung einer starren Verbindung mit dem ersten Tragarm (6) und/oder, sofern abhängig von Anspruch 2, derdritte Drehblock (15c) Mittel zur Herstellung einer starren Verbindung mit dem zweiten Tragarm (9) aufweist.

7. Nachführeinheit (43) nach einem der Ansprüche 5 oder 6, **dadurch gekennzeichnet, dass** der erste Drehblock (15a) und/oder der zweite Drehblock (15b) und/oder, sofern abhängig von Anspruch 2, der dritte Drehblock (15c) jeweils eine Hauptdichtung (16) zur Abdichtung des äußeren Rohrs (14) sowie eine Nebendichtung (17) zur Abdichtung des inneren Rohrs (13) aufweist.

8. Nachführeinheit (43) nach Anspruch 7, **dadurch gekennzeichnet, dass** die Hauptdichtung (16) die schwimmende Lagerung des äußeren Rohrs (14) und/oder die Nebendichtung (17) die schwimmende Lagerung des inneren Rohrs (13) vermittelt.

9. Nachführeinheit (43) nach einem der Ansprüche 7 oder 8, **dadurch gekennzeichnet, dass** die Hauptdichtung (16) eine das äußere Rohr (14) zumindest abschnittsweise umschließende Hülse (18) sowie vorzugsweise ein an einem Ende des äußeren Rohres (14) angeordnetes Dichtelement, insbesondere einen O-Ring (19), umfasst.

10. Nachführeinheit (43) nach einem der Ansprüche 1 bis 9, **dadurch gekennzeichnet, dass** der erste Drehblock (15a) und/oder der zweite Drehblock (15b) und/oder, sofern abhängig von Anspruch 2, der dritte Drehblock (15c) jeweils von einer Ummantelungsbuchse (20) umgeben ist, wobei die Ummantelungsbuchse (20) drehstarr mit dem jeweiligen Drehblock (15a, 15b, 15c) verbunden, aber gegenüber dem jeweiligen Leitungsabschnitt (55, 56,57) drehbar ist.

11. Nachführeinheit (43) nach Anspruch 10, **dadurch gekennzeichnet, dass** die Ummantelungsbuchse (20) derart an dem jeweiligen Drehblock (15a, 15b, 15c) befestigt ist, dass die Hauptdichtung (16), vorzugsweise ein Flansch der Hülse (18), zwischen Ummantelungsbuchse (20) und dem jeweiligen Drehblock (15a, 15b, 15c) geklemmt ist.

12. Nachführeinheit (43) nach einem der Ansprüche 10 oder 11, **dadurch gekennzeichnet, dass** zwischen der Ummantelungsbuchse (20) und dem jeweiligen Drehblock (15a, 15b, 15c) Mittel zur thermischen Isolierung angeordnet sind.

13. Nachführeinheit (43) nach einem der Ansprüche 5 bis 12, **dadurch gekennzeichnet, dass** der erste Drehblock (15a) und/oder der zweite Drehblock (15b) und/oder, sofern abhängig von Anspruch 2, der dritte Drehblock (15c) jeweils einen zweiflutigen Anbindungsabschnitt (58a, 58b, 58c) zur fluidischen Verbindung des ersten Drehblocks (15a) mit dem Basiselement, insbesondere Steher (11), und/oder des zweiten Drehblocks (15b) mit dem ersten Tragarm (6) und/oder des dritten Drehblocks (15c) mit dem zweiten Tragarm (9) aufweist, wobei das innere Rohr (13) den Rücklauf und der Ringspalt den Vorlauf führt.

14. Nachführeinheit (43) nach einem der Ansprüche 5 bis 12, **dadurch gekennzeichnet, dass** der erste Drehblock (15a) und/oder der zweite Drehblock (15b) und/oder, sofern abhängig von Anspruch 2, der dritte Drehblock (15c) jeweils einen dreiflutigen Anbindungsabschnitt (58a, 58b, 58c) zur fluidischen Verbindung des ersten Drehblocks (15a) mit dem Basiselement, insbesondere Steher (11), und/oder des zweiten Drehblocks (15b) mit dem ersten Tragarm (6) und/oder des dritten Drehblocks (15c) mit dem zweiten Tragarm (9) aufweist, wobei das innere Rohr (13) den Vorlauf und der Ringspalt den Rücklauf führt.

15. Solaranlage umfassend zumindest
a. eine Nachführeinheit nach einem der Ansprüche 1 bis 14,
b. ein Basiselement, insbesondere einen Steher (11), sowie zumindest
c. einen ersten Tragarm (6) mit zumindest einem daran befestigten Solarkollektor, insbesondere einem spiegelreflektierenden Solarkollektor, und/oder Solarzellen,
**dadurch gekennzeichnet, dass** der erste Drehblock (15a) abdichtend und drehstarr mit Leitungen des Basiselements, insbesondere des Stehers (11), und der zweite Drehblock (15b) abdichtend und drehstarr mit Leitungen des ersten Tragarms (6) fluidisch verbunden ist.

## Claims

1. Tracking unit (43) for a solar installation, the tracking unit (43) comprising at least:
a. a housing with a housing interior (53), the housing being designed in particular to accommodate a distribution unit (54), which distribution unit (54) comprises at least a first pipe section (55) with a first rotary joint (15a), the first rotary joint (15a) being configured to establish a fluid connection between the first pipe section (55) and a base element, in particular a support post (11), and a second pipe section (56) with a second rotary joint (15b), the second rotary joint (15b) being configured to establish a fluid connection between the second pipe section (56) and a first support arm (6) of the solar installation, wherein the first pipe section (55) is rotatably connected to the first rotary joint (15a), and the second pipe section (56) is rotatably connected to the second rotary joint (15b), and preferably also designed to accommodate additional components such as rotary feedthroughs, electrical components, slip rings, cables, hoses, and/or a control unit in the housing interior (53), and formed by at least a support frame (1) and a cover (10) detachably connected to the support frame (1), and
b. at least a first gear unit (2) for rotation about a vertical axis (47) and a second gear unit (3) for rotation about a horizontal axis (48), wherein the first gear unit (2) and the second gear unit (3) are preferably each configured as slewing ring gear units,
c. wherein the distribution unit (54) is arranged in the housing interior (53), preferably axially centered with respect to the vertical axis (47) and the horizontal axis (48),
d. wherein a gear housing of the first gear unit (2) is rotationally fixedly connected to the support frame (1), and an output of the first gear unit (2) is accessible from the outside to be connected to a base element, in particular a support post (11), and
e. wherein a gear housing of the second gear unit (3) is rotationally fixedly connected to the support frame (1), and an output of the second gear unit (3) is accessible from the outside to be connected to a first support arm (6) of the solar installation.

2. Tracking unit (43) according to claim 1, **characterized in that** the distribution unit (54) comprises a third pipe section (57) with a third rotary joint (15c), the third rotary joint (15c) being configured to establish a fluid connection between the third pipe section (57) and a second support arm (9) of the solar installation, wherein the third pipe section (57) is rotatably connected to the third rotary joint (15c).

3. Tracking unit (43) according to one of claims 1 or 2, **characterized in that** the first pipe section (55) is mounted floating within the first rotary joint (15a), and/or the second pipe section (56) is mounted floating within the second rotary joint (15b), and/or, if depending on claim 2, the third pipe section (57) is mounted floating within the third rotary joint (15c).

4. Tracking unit (43) according to one of claims 2 or 3, **characterized in that** the distribution unit (54) is designed as a T-piece, the stem forming the first pipe section (55) and the arms forming the second pipe section (56) and the third pipe section (57) of the distribution unit (54).

5. Tracking unit (43) according to one of claims 1 to 4, **characterized in that** at least one pipe section (55, 56, 57), preferably all pipe sections (55, 56, 57), of the distribution unit (54) are designed as a pipe-in-pipe system with an inner pipe (13) and an outer pipe (14), a ring gap being formed between the inner pipe (13) and the outer pipe (14) to guide a supply and return of a heating circuit.

6. Tracking unit (43) according to one of claims 1 to 5, **characterized in that** the first rotary joint (15a) comprises means for rigid connection to the base element, in particular the support post (11), and/or the second rotary joint (15b) comprises means for rigid connection to the first support arm (6), and/or, if depending on claim 2, the third rotary joint (15c) comprises means for rigid connection to the second support arm (9).

7. Tracking unit (43) according to one of claims 5 or 6, **characterized in that** the first rotary joint (15a) and/or the second rotary joint (15b) and/or, if depending on claim 2, the third rotary joint (15c), each comprise a primary seal (16) for sealing the outer pipe (14) and an auxiliary seal (17) for sealing the inner pipe (13).

8. Tracking unit (43) according to claim 7, **characterized in that** the primary seal (16) facilitates the floating mounting of the outer pipe (14) and/or the auxiliary seal (17) facilitates the floating mounting of the inner pipe (13).

9. Tracking unit (43) according to one of claims 7 or 8, **characterized in that** the primary seal (16) comprises a sleeve (18) at least partially enclosing the outer pipe (14), and preferably a sealing element, in particular an O-ring (19), arranged at one end of the outer pipe (14).

10. Tracking unit (43) according to one of claims 1 to 9, **characterized in that** the first rotary joint (15a) and/or the second rotary joint (15b) and/or, if depending on claim 2, the third rotary joint (15c), is each surrounded by a cladding sleeve (20), the cladding sleeve (20) being rotationally fixedly connected to the respective rotary joint (15a, 15b, 15c), but rotatable relative to the respective pipe section (55, 56, 57).

11. Tracking unit (43) according to claim 10, **characterized in that** the cladding sleeve (20) is attached to the respective rotary joint (15a, 15b, 15c) in such a way that the primary seal (16), preferably a flange of the sleeve (18), is clamped between the cladding sleeve (20) and the respective rotary joint (15a, 15b, 15c).

12. Tracking unit (43) according to one of claims 10 or 11, **characterized in that** means for thermal insulation are arranged between the cladding sleeve (20) and the respective rotary joint (15a, 15b, 15c).

13. Tracking unit (43) according to one of claims 5 to 12, **characterized in that** the first rotary joint (15a) and/or the second rotary joint (15b) and/or, if depending on claim 2, the third rotary joint (15c), each comprise a dual-flow connection section (58a, 58b, 58c) for fluid connection of the first rotary joint (15a) with the base element, in particular support post (11), and/or the second rotary joint (15b) with the first support arm (6), and/or the third rotary joint (15c) with the second support arm (9), wherein the inner pipe (13) guides the return flow and the ring gap guides the supply flow.

14. Tracking unit (43) according to one of claims 5 to 12, **characterized in that** the first rotary joint (15a) and/or the second rotary joint (15b) and/or, if depending on claim 2, the third rotary joint (15c), each comprise a triple-flow connection section (58a, 58b, 58c) for fluid connection of the first rotary joint (15a) with the base element, in particular support post (11), and/or the second rotary joint (15b) with the first support arm (6), and/or the third rotary joint (15c) with the second support arm (9), wherein the inner pipe (13) guides the supply flow and the ring gap guides the return flow.

15. Solar installation comprising at least
a. a tracking unit according to one of claims 1 to 14,
b. a base element, in particular a support post (11), and at least
c. a first support arm (6) with at least one solar collector attached thereto, in particular a mirror-reflective solar collector and/or solar cells,
**characterized in that** the first rotary joint (15a) is sealingly and rotationally fixedly connected to conduits of the base element, in particular of the support post (11), and the second rotary joint (15b) is sealingly and rotationally fixedly connected to conduits of the first support arm (6).

## Revendications

1. Unité de suivi (43) pour une installation solaire, ladite unité de suivi (43) comprenant au moins:
a. un boîtier avec un intérieur de boîtier (53), lequel boîtier est conçu au moins pour recevoir une unité de distribution (54), ladite unité de distribution (54) comprenant au moins une première section de conduit (55) avec un premier raccord tournant (15a), ledit premier raccord tournant (15a) étant conçu pour établir une connexion fluidique entre la première section de conduit (55) et un élément de base, en particulier un mât (11), ainsi qu'une deuxième section de conduit (56) avec un deuxième raccord tournant (15b), ledit deuxième raccord tournant (15b) étant conçu pour établir une connexion fluidique entre la deuxième section de conduit (56) et un premier bras porteur (6) de l'installation solaire, la première section de conduit (55) étant reliée de manière rotative au premier raccord tournant (15a), et la deuxième section de conduit (56) étant reliée de manière rotative au deuxième raccord tournant (15b), et préférablement également conçue pour recevoir d'autres composants tels que des traversées rotatives, de l'électronique, des bagues collectrices, des câbles, des tuyaux et/ou une unité de commande, l'intérieur du boîtier (53) étant formé par au moins une structure porteuse (1) et un couvercle (10) amovible relié à la structure porteuse (1),
b. au moins un premier engrenage (2) pour la rotation autour d'un axe vertical (47) et un deuxième engrenage (3) pour la rotation autour d'un axe horizontal (48), lesdits premier engrenage (2) et deuxième engrenage (3) étant préférablement réalisés chacun comme des engrenages à couronne,
c. l'unité de distribution (54) étant disposée à l'intérieur du boîtier (53), préférablement centrée par rapport à l'axe vertical (47) et à l'axe horizontal (48),
d. un carter d'engrenage du premier engrenage (2) étant fixé de manière rigide en rotation à la structure porteuse (1), et un arbre de sortie du premier engrenage (2) étant accessible de l'extérieur pour être relié à un élément de base, notamment un mât (11), et
e. un carter d'engrenage du deuxième engrenage (3) étant fixé de manière rigide en rotation à la structure porteuse (1), et un arbre de sortie du deuxième engrenage (3) étant accessible de l'extérieur pour être relié à un premier bras porteur (6) de l'installation solaire.

2. Unité de suivi (43) selon la revendication 1, **caractérisée en ce que** l'unité de distribution (54) comprend une troisième section de conduit (57) avec un troisième raccord tournant (15c), ledit troisième raccord tournant (15c) étant conçu pour établir une connexion fluidique entre la troisième section de conduit (57) et un deuxième bras porteur (9) de l'installation solaire, la troisième section de conduit (57) étant reliée de manière rotative au troisième raccord tournant (15c).

3. Unité de suivi (43) selon l'une des revendications 1 ou 2, **caractérisée en ce que** la première section de conduit (55) est montée flottante dans le premier raccord tournant (15a) et/ou la deuxième section de conduit (56) est montée flottante dans le deuxième raccord tournant (15b) et/ou, si dépendante de la revendication 2, la troisième section de conduit (57) est montée flottante dans le troisième raccord tournant (15c).

4. Unité de suivi (43) selon l'une des revendications 2 ou 3, **caractérisée en ce que** l'unité de distribution (54) est réalisée sous forme de pièce en T, dont la tige forme la première section de conduit (55), et les bras forment la deuxième section de conduit (56) et la troisième section de conduit (57) de l'unité de distribution (54).

5. Unité de suivi (43) selon l'une des revendications 1 à 4, **caractérisée en ce qu'**au moins une section de conduit (55, 56, 57), de préférence toutes les sections de conduit (55, 56, 57), de l'unité de distribution (54) est réalisée sous forme d'un système tube-dans-le-tube avec un tube intérieur (13) et un tube extérieur (14), un espace annulaire étant formé entre le tube intérieur (13) et le tube extérieur (14) pour conduire un aller et un retour d'un circuit de chauffage.

6. Unité de suivi (43) selon l'une des revendications 1 à 5, **caractérisée en ce que** le premier raccord tournant (15a) comprend des moyens pour établir une connexion rigide avec l'élément de base, notamment le mât (11), et/ou le deuxième raccord tournant (15b) comprend des moyens pour établir une connexion rigide avec le premier bras porteur (6) et/ou, si dépendante de la revendication 2, le troisième raccord tournant (15c) comprend des moyens pour établir une connexion rigide avec le deuxième bras porteur (9).

7. Unité de suivi (43) selon l'une des revendications 5 ou 6, **caractérisée en ce que** le premier raccord tournant (15a) et/ou le deuxième raccord tournant (15b) et/ou, si dépendante de la revendication 2, le troisième raccord tournant (15c) comprend chacun un joint principal (16) pour l'étanchéité du tube extérieur (14) ainsi qu'un joint secondaire (17) pour l'étanchéité du tube intérieur (13).

8. Unité de suivi (43) selon la revendication 7, **caractérisée en ce que** le joint principal (16) permet le montage flottant du tube extérieur (14) et/ou le joint secondaire (17) permet le montage flottant du tube intérieur (13).

9. Unité de suivi (43) selon l'une des revendications 7 ou 8, **caractérisée en ce que** le joint principal (16) comprend une douille (18) entourant au moins partiellement le tube extérieur (14) ainsi qu'un élément d'étanchéité, de préférence un joint torique (19), disposé à une extrémité du tube extérieur (14).

10. Unité de suivi (43) selon l'une des revendications 1 à 9, **caractérisée en ce que** le premier raccord tournant (15a) et/ou le deuxième raccord tournant (15b) et/ou, si dépendante de la revendication 2, le troisième raccord tournant (15c) est entouré d'un manchon (20), ledit manchon (20) étant solidaire en rotation avec le raccord tournant concerné (15a, 15b, 15c), mais tournant par rapport à la section de conduit concernée (55, 56, 57).

11. Unité de suivi (43) selon la revendication 10, **caractérisée en ce que** le manchon (20) est fixé au raccord tournant concerné (15a, 15b, 15c) de telle manière que le joint principal (16), de préférence une bride de la douille (18), est pincé entre le manchon (20) et le raccord tournant concerné (15a, 15b, 15c).

12. Unité de suivi (43) selon l'une des revendications 10 ou 11, **caractérisée en ce que** des moyens d'isolation thermique sont disposés entre le manchon (20) et le raccord tournant concerné (15a, 15b, 15c).

13. Unité de suivi (43) selon l'une des revendications 5 à 12, **caractérisée en ce que** le premier raccord tournant (15a) et/ou le deuxième raccord tournant (15b) et/ou, si dépendante de la revendication 2, le troisième raccord tournant (15c) comprend chacun une section de raccordement biflux (58a, 58b, 58c) pour la connexion fluidique du premier raccord tournant (15a) à l'élément de base, notamment le mât (11), et/ou du deuxième raccord tournant (15b) au premier bras porteur (6), et/ou du troisième raccord tournant (15c) au deuxième bras porteur (9), le tube intérieur (13) conduisant le retour et l'espace annulaire conduisant l'aller.

14. Unité de suivi (43) selon l'une des revendications 5 à 12, **caractérisée en ce que** le premier raccord tournant (15a) et/ou le deuxième raccord tournant (15b) et/ou, si dépendante de la revendication 2, le troisième raccord tournant (15c) comprend chacun une section de raccordement triflux (58a, 58b, 58c) pour la connexion fluidique du premier raccord tournant (15a) à l'élément de base, notamment le mât (11), et/ou du deuxième raccord tournant (15b) au premier bras porteur (6), et/ou du troisième raccord tournant (15c) au deuxième bras porteur (9), le tube intérieur (13) conduisant l'aller et l'espace annulaire conduisant le retour.

15. Installation solaire comprenant au moins :
a. une unité de suivi selon l'une des revendications 1 à 14,
b. un élément de base, notamment un mât (11), ainsi qu'au moins
c. un premier bras porteur (6) avec au moins un capteur solaire fixé dessus, en particulier un capteur solaire à réflexion par miroir et/ou des cellules solaires,
**caractérisée en ce que** le premier raccord tournant (15a) est relié de manière étanche et rigide en rotation avec les conduites de l'élément de base, notamment du mât (11), et le deuxième raccord tournant (15b) est relié de manière étanche et rigide en rotation avec les conduites du premier bras porteur (6).
